# EUROPEAN PATENT APPLICATION

(11) **EP 4 451 359 A2**
(43) Date of publication of application: **23.10.2024**
(21) Application number: 24166089.3
(22) Date of filing: 25.03.2024
(51) Int. Cl.: H01M 4/04, H01M 4/1391, H01M 4/66, H01M 4/131, H01M 4/62, H01M 10/04, H01M 10/0525, H01M 10/0562, H01M 10/0585, H01M 4/02

(54) **DRY ELECTRODE, METHOD FOR MANUFACTURING DRY ELECTRODE, AND LITHIUM BATTERY INCLUDING THE DRY ELECTRODE**

(30) Priority: 26.03.2023 KR 20230039376; 13.09.2023 KR 20230122041
(71) Applicant: Samsung SDI Co., Ltd., Yongin-si, Gyeonggi-do 17084 (KR)
(72) Inventor: BANG, Youmin, 17084 Yongin-si (KR); LEE, Jinhyon, 17084 Yongin-si (KR); NAM, Hyun, 17084 Yongin-si (KR); KWON, Seunguk, 17084 Yongin-si (KR); KIM, Seongdae, 17084 Yongin-si (KR); PYUN, Ahram, 17084 Yongin-si (KR); KWON, Ilkyong, 17084 Yongin-si (KR); YOON, Yeonhee, 17084 Yongin-si (KR); LEE, Donggeun, 17084 Yongin-si (KR); CHOI, Jongsup, 17084 Yongin-si (KR)
(74) Representative: Marks & Clerk LLP

(57) **Abstract**

Provided is a dry electrode, a method for manufacturing a dry electrode, and lithium battery including the dry electrode. The dry electrode includes an electrode current collector, a dry electrode film on one side or two opposing sides of the electrode current collector, and an interlayer between the electrode current collector and the dry electrode film; wherein the interlayer includes an outer peripheral region provided along at least a portion of an outer periphery of the interlayer, and an inter-region excluding the outer peripheral region, wherein a thickness of the outer peripheral region is greater than a thickness of the inter-region. The method includes providing one or more interlayers on one side or two opposing sides of an electrode current collector to prepare a first laminate, preparing a second laminate by providing, on the first laminate, a dry electrode film having a larger area than the area of the interlayer, wherein the dry electrode film includes a first region on the interlayer, and a second region extending from the first region beyond an outer periphery of the interlayer, and pulling at least a portion of the second region of the dry electrode film to separate the second region from the first region, thereby providing a dry electrode, the interlayer includes: an outer peripheral region and an inter-region, wherein a thickness of the outer peripheral region is greater than a thickness of the inter-region.

## Description

### BACKGROUND

### 1. Field

One or more embodiments of the present disclosure relate to a dry electrode, a method for manufacturing the dry electrode, and a lithium battery including the dry electrode.

### 2. Description of the Related Art

In order to meet the miniaturization and high performance characteristics of various devices, high energy density is important in addition to miniaturization and weight reduction of lithium batteries. In this regard, high-capacity lithium batteries are important.

In order to implement lithium batteries suitable for the above use, electrodes having a high loading are being studied.

If manufacturing an electrode having a high loading, the possibility of defects such as collapse of an electrode active material layer increases in the process of introducing the electrode active material layer onto an electrode current collector due to an increase in the thickness of the electrode active material layer.

A method of easily introducing an electrode active material layer having a high loading onto an electrode current collector is desired.

### SUMMARY

One or more embodiments of the present disclosure include a dry electrode and a method for manufacturing the same, wherein the position of a dry electrode film introduced on an electrode current collector may be easily adjusted.

One or more embodiments include a dry electrode and a method for manufacturing the same, wherein various suitable types (or kinds) of dry electrode films may be easily introduced without (or substantially without) damaging an electrode current collector.

One or more embodiments include a method for manufacturing the dry electrode.

One or more embodiments include a lithium battery including the dry electrode.

Additional aspects of embodiments will be set forth in part in the description which follows and, in part, will be apparent from the description, or may be learned by practice of the presented embodiments of the present disclosure.

According to one or more embodiments, a dry electrode includes an electrode current collector, a dry electrode film on (e.g. disposed on) one side or two opposing sides (e.g. both sides) of the electrode current collector, and an interlayer between (e.g. disposed between) the electrode current collector and the dry electrode film, wherein the interlayer includes an outer peripheral region provided (e.g. disposed) along at least a portion of an outer periphery of the interlayer and an inter-region excluding the outer peripheral region, wherein a thickness of the outer peripheral region is greater than a thickness of the inter-region.

According to one or more embodiments, a method for manufacturing a dry electrode includes providing (e.g. arranging) an interlayer on an electrode current collector to prepare a first laminate, preparing a second laminate by providing (e.g. arranging), on the first laminate, a dry electrode film having a larger area than an area of the interlayer (e.g. in a plan view, such as a view in a stacking or thickness direction of the dry electrode), wherein the dry electrode film includes a first region on (e.g. disposed on) the interlayer, and a second region extending from the first region beyond an outer periphery of the interlayer, and pulling at least a portion of the second region of the dry electrode film to separate the second region from the first region, thereby providing a dry electrode, wherein the interlayer includes an outer peripheral region provided (e.g. disposed) along at least a portion of the outer periphery of the interlayer, and an inter-region excluding the outer peripheral region, wherein a thickness of the outer peripheral region is greater than a thickness of the inter-region.

According to one or more embodiments, a lithium battery includes a first (e.g. positive) electrode, a second (e.g. negative) electrode, and an electrolyte between (e.g. disposed between) the first (e.g. positive) electrode and the second (e.g. negative) electrode, wherein one or more of the first (e.g. positive) electrode and the second (e.g. negative) electrode include the above-described dry electrode.

At least some of the above and other features of the invention are set out in the claims.

### BRIEF DESCRIPTION OF THE DRAWINGS

The above and other aspects and features of certain embodiments of the present disclosure will be more apparent from the following description taken in conjunction with the accompanying drawings, in which:
FIG. 1A and FIG. 1B are cross-sectional views of a dry electrode according to embodiments;
FIG. 1C and FIG. 1D are perspective views of a dry electrode according to embodiments;
FIG. 2A and FIG. 2B are cross-sectional views of a first assembly according to embodiments;
FIG. 2C and FIG. 2D are perspective views of a first assembly according to embodiments;
FIG. 3A and FIG. 3B are cross-sectional views of a second assembly according to embodiments;
FIG. 3C and FIG. 3D are perspective views of a second assembly according to embodiments;
FIG. 4A and FIG. 4B are perspective views of a second assembly according to embodiments;
FIG. 5A to FIG. 5E are plan views of a dry electrode according to embodiments;
FIG. 6A to FIG. 6Q are plan views of an ordered pattern of a dry electrode according to embodiments;
FIG. 7 is a schematic diagram of a lithium battery according to embodiments;
FIG. 8 is a schematic diagram of a lithium battery according to embodiments;
FIG. 9 is a schematic diagram of a lithium battery according to embodiments; and
FIG. 10 is a scanning electron microscope image of a cross-section of a dry positive electrode active material layer prepared in Example 1.

### DETAILED DESCRIPTION

Reference will now be made in more detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of embodiments of the present description. As used herein, the term "and/or" includes any and all combinations of one or more of the associated listed items. Expressions such as "at least one of," if preceding a list of elements, modify the entire list of elements and do not modify the individual elements of the list.

The subject matter of the present disclosure described hereinafter may be modified in various suitable ways, and may have many examples, and thus, certain examples are illustrated in the drawings, and are described in more detail. The present disclosure, however, should not be construed as limited to the example embodiments set forth herein, and rather, should be understood as covering all modifications, equivalents, or alternatives falling within the scope of the present disclosure.

The terms used herein are used for the purpose of describing example embodiments only, and are not intended to limit the present disclosure. An expression used in the singular encompasses the expression of the plural, unless it has a clearly different meaning in the context. It will be further understood that the terms "comprises" and/or "comprising," or "includes" and/or "including" if used in this specification, specify the presence of stated features, regions, integers, steps, operations, elements, and/or components, but do not preclude the presence or addition of one or more other features, regions, integers, steps, operations, elements, components, and/or groups thereof. The sign "/" used herein may be interpreted as "and," or as "or" depending on the context.

In the drawings, thicknesses may be magnified and/or exaggerated to clearly illustrate various layers and regions. Like reference numbers may refer to like elements throughout the drawings and the following description. It will be understood that if one element, layer, film, section, sheet, etc. is referred to as being "on" another element, it can be directly on the other element or intervening elements may be present therebetween. Although the terms "first," "second," etc. may be used herein to describe various elements, these elements should not be limited by these terms. These terms are only used to distinguish one element from another element. Components having substantially the same functional configuration in the present specification and drawings refer to the same reference numerals, and redundant description thereof may not be repeated.

In the present disclosure, the "particle diameter" of a particle represents an average diameter if the particles are spherical and represents an average major axis length if the particles are non-spherical. The particle diameter of the particles may be measured using a particle size analyzer (PSA). The "particle diameter" of particles may be, for example, the average particle diameter. An average particle diameter may be, for example, a median particle diameter (D50). The median particle diameter (D50) refers to the particle size corresponding to the cumulative volume of 50%, calculated from the smallest side of the particle in the size distribution of the particle as measured, for example, by laser diffraction.

The term "metal" used herein includes both metals and metalloids such as silicon and germanium in an elemental or ionic state.

The term "alloy" used herein refers to a mixture of two or more metals.

The term "positive electrode active material" used herein refers to a positive electrode material capable of undergoing lithiation and delithiation.

The term "negative electrode active material" used herein refers to a negative electrode material capable of undergoing lithiation and delithiation.

The terms "lithiation" and "lithiate" used herein refer to a process of adding lithium to a positive electrode active material or a negative electrode active material.

The terms "delithiation" and "delithiate" used herein refer to a process of removing lithium from a positive electrode active material or a negative electrode active material.

The terms "charging" and "charge" used herein refer to a process of providing electrochemical energy to a battery.

The term "discharging" and "discharge" used herein refer to a process of removing electrochemical energy from a battery.

The term "positive electrode" used herein refer to an electrode in which electrochemical reduction and lithiation occur during a discharging process.

The term "negative electrode" used herein refer to an electrode in which electrochemical oxidation and delithiation occurs during the discharge process.

Hereinafter, a dry electrode according to embodiments will be described in more detail.

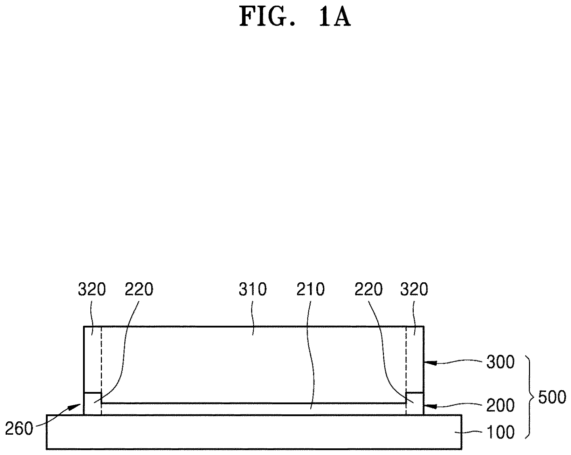

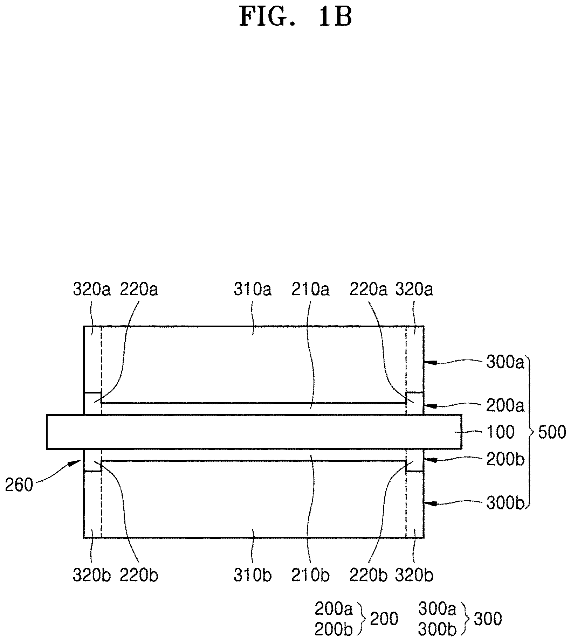

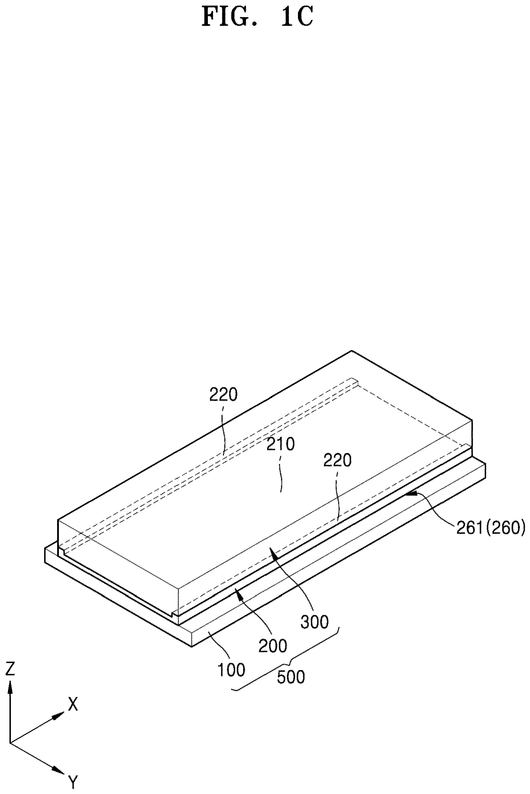

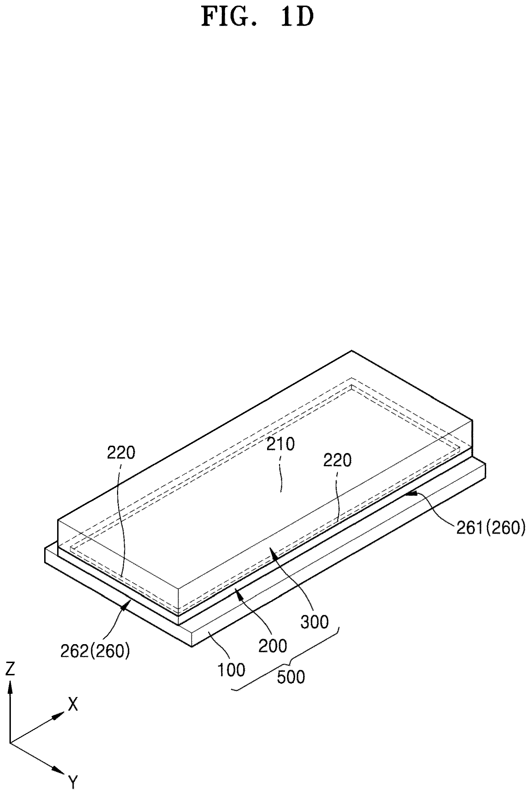

FIG. 1A and FIG. 1B are cross-sectional views of a dry electrode according to embodiments. FIG. 1C and FIG. 1D are perspective views of a dry electrode according to embodiments.

A dry electrode 500 according to an aspect of embodiments of the present disclosure may include an electrode current collector 100, a dry electrode film 300 on one side or two opposing sides of the electrode current collector 100, and an interlayer 200 between the electrode current collector 100 and the dry electrode film 300, wherein the interlayer 200 includes an outer peripheral region 220 provided along at least a portion of an outer periphery 260 of the interlayer 200 and an inter-region 210 excluding the outer peripheral region 220, wherein the thickness of the outer peripheral region 220 may be greater than the thickness of the inter-region 210. The dry electrode film 300 may include an inter-region 310 on the interlayer 200 and an outer peripheral region 320 on the outer peripheral region 220 of the interlayer 200.

### Interlayer

For example, a portion of the dry electrode film 300 may be exposed to the outside of the interlayer 200 in a process of stacking the dry electrode film 300 on the interlayer 200, and a process of removing the exposed dry electrode film 300 may be performed. In this embodiment, a process for distinguishing a region of the dry electrode film 300 on the interlayer 200 and a portion of the dry electrode film 300 exposed to the outside of the interlayer 200 may be beneficial because another interlayer 200 may have a constant thickness, and as a result, there is a problem in that a process for manufacturing a dry electrode 500 may be delayed (e.g., because it is more difficult to identify and/or separate the portion of the dry electrode film that is exposed to the outside of the interlayer).

For example, the thickness of the outer peripheral region 220 of the dry electrode 500 may be greater than the thickness of the inter-region 210, so that a region of the dry electrode film 300 on the interlayer 200 and a region of the dry electrode film 300 exposed to the outside of the interlayer 200 may be more easily distinguished in a process of manufacturing the dry electrode 500. In this regard, without an additional procedure for distinguishing the region on the interlayer 200 of the dry electrode film 300 and the region exposed to the outside of the interlayer 200, the region exposed to the outside of the interlayer 200 of the dry electrode film 300 may be more easily removed, so that the manufacturing efficiency of the dry electrode 500 may be improved. By adjusting a region in which the outer peripheral region 220 is provided, it is possible to more easily form a patterned dry electrode film 300 on the electrode current collector 100.

For example, an outer periphery 260 of an interlayer may mean a boundary line distinguishing a region in which the interlayer is formed and a region in which the interlayer is not formed. The outer periphery 260 may mean a boundary line provided at the outermost portion of the interlayer 200. For example, the outer periphery 260 may include a first outer periphery 261 parallel to a machine X direction (e.g. of the dry electrode film 300) and a second outer periphery 262 parallel to a transverse Y direction (e.g. of the dry electrode film 300), as shown in FIG. 1C and FIG. 1D.

For example, the machine direction may be, for example, an x direction, the transverse direction is, for example, a y direction, and the thickness direction may be, for example, a z direction. For example, the machine direction may be a direction in which dry electrode films 300a, 300b, and 300 are stretched during the manufacturing of the dry electrode films 300a, 300b, and 300, as shown in FIG. 1A and FIG. 1B. The dry electrode film 300a may include an inter-region 310a and an outer peripheral region 320a, and the dry electrode film 300b may include an inter-region 310b and an outer peripheral region 320b. Referring to FIG. 1C and FIG. 1D, the machine direction may be, for example, an x-axis direction. A direction perpendicular to the machine direction may be a transverse direction. The transverse direction is, for example, the y direction perpendicular to the x direction. A direction in which the electrode current collector 100, the interlayer 200, and the dry electrode film 300 are stacked may be the thickness direction. The thickness direction may be, for example, the z direction.

For example, the outer peripheral region 220 may be provided along at least a portion of the outer periphery 260. For example, the outer peripheral region 220 may be continuously or discontinuously provided along at least a portion of the outer periphery 260.

For example, the outer periphery 260 may include the first outer periphery 261 parallel to the machine X direction and the second outer periphery 262 parallel to the transverse Y direction.

Referring to FIG. 1C, the outer peripheral region 220 may be provided along the first outer periphery 261. The outer peripheral region 220 may be parallel to the machine direction. In this embodiment, if the outer peripheral region 220 is parallel to the machine direction, a direction in which the dry electrode film 300 is stretched and a direction in which the outer peripheral region 220 is provided coincide, so that the region exposed to the outside of the interlayer 200 of the dry electrode film 300 may be more easily removed. For example, the outer peripheral region 220 may be provided along only the first outer periphery 261 parallel to the machine direction.

According to another embodiment, the outer peripheral region 220 may be provided along the second outer periphery 262. The outer peripheral region 220 may be parallel to the transverse direction. For example, the outer peripheral region 220 may be provided along only the second outer periphery 261 parallel to the transverse direction.

Referring to FIG. 1D, the outer peripheral region 220 may be provided along the outer periphery 260. For example, the outer peripheral region 220 may be provided along the entirety of the outer periphery 260. For example, the outer peripheral region 220 may be provided along both the first outer periphery 261 parallel to the machine X direction and the second outer periphery 262 parallel to the transverse Y direction. In this embodiment, a position at which the outer peripheral region 220 is provided may be more easily adjusted to more easily form the patterned dry electrode film 300 on the electrode current collector 100.

According to embodiments, the ratio of the area of the outer peripheral region 220 (e.g. in a plan view, such as a view in a stacking or thickness direction of the dry electrode) to the total area of the interlayer 200 (e.g. in a plan view, such as a view in a stacking or thickness direction of the dry electrode) may be about 1 % to about 20%. For example, if the area of the outer peripheral region 220 satisfies the above range, it is easier to distinguish between a region on the interlayer 200 of the dry electrode film 300 and a region outside the interlayer 200 in the process of manufacturing the dry electrode 500. For example, according to embodiments, the ratio of the area of the outer peripheral region 220 (e.g. in a plan view, such as a view in a stacking or thickness direction of the dry electrode) to the total area of the interlayer 200 (e.g. in a plan view, such as a view in a stacking or thickness direction of the dry electrode) may be about 5% to about 20%, about 1% to about 15%, about 5% to about 15%, about 1% to about 10%, or about 5% to about 10%.

According to embodiments, the ratio of the thickness of the outer peripheral region 220 to the thickness of the inter-region 210 may be greater than about 1 but not more than about 5. For example, if the ratio of the thickness of the outer peripheral region 220 to the thickness of the inter-region 210 satisfies the above ranges, the dry electrode film 300 provided outside the interlayer 200 may be more easily removed.

For example, the ratio of the thickness of the outer peripheral region 220 to the thickness of the inter-region 210 may be greater than about 1 to about 4 or less, greater than about 1 to about 3 or less, or greater than about 1 to about 2 or less (e.g. about 1.2 to about 4, about 1.5 to about 3, or about 1.5 to about 2).

According to embodiments, the interlayer 200 may be provided, for example, on one side or two opposing sides of the electrode current collector 100.

Referring to FIG. 1A and FIG. 1B, interlayers 200a, 200b, and 200 may be directly provided, for example, on one side or two opposing sides of the electrode current collector 100. Therefore, another layer may not be between the electrode current collector 100 and the interlayers 200a, 200b, and 200. Because the interlayers 200a, 200b, and 200 are directly on one side or two opposing sides of the electrode current collector 100, the binding force of the electrode current collector 100 and the dry electrode films 300a, 300b, and 300 may be further improved. The interlayer 200a may include an inter-region 210a and an outer peripheral region 220a, and the interlayer 200b may include an inter-region 210b and an outer peripheral region 220b.

The thickness of the interlayers 200a, 200b, and 200 may be, for example, about 30% or less, about 25% or less, about 20% or less, about 15% or less, about 10% or less, about 5% or less, or about 3% or less of the thickness of the electrode current collector 100. A thickness of the interlayer may correspond to a thickness of the inter-region.

For example, the thickness of the interlayers 200a, 200b, and 200 may be about 0.01 % to about 30%, about 0.1% to about 30%, about 0.5% to about 30%, about 1 % to about 25%, about 1 % to about 20%, about 1 % to about 15%, about 1 % to about 10%, about 1% to about 5%, or about 1% to about 3% of the thickness of the electrode current collector 100. The thickness of the interlayers 200a, 200b, and 200 may be, for example, about 10 nm to about 5 µm, about 50 nm to about 5 µm, about 200 nm to about 4 µm, about 500 nm to about 3 µm, about 500 nm to about 2 µm, about 500 nm to about 1.5 µm, or about 700 nm to about 1.3 µm. Because the interlayers 200a, 200b, and 200 may have a thickness in the above ranges, a binding force between the electrode current collector 100 and the dry electrode films 300a, 300b, and 300 is further improved, and an increase in interfacial resistance may be suppressed or reduced.

According to embodiments, the interlayers 200a, 200b, and 200 may include, for example, a binder. Because the interlayers 200a, 200b, and 200 may include a binder, the binding force between the electrode current collector 100 and the dry electrode films 300a, 300b, and 300 may be further improved.

For example, the binder included in the interlayers 200a, 200b, and 200 may be a conductive binder and/or a non-conductive binder. The conductive binder may be, for example, an ionically conductive binder and/or an electronically conductive binder. A binder that has both ionic conductivity and electronic conductivity may belong to both an ionically conductive binder and an electronically conductive binder.

For example, the ionically conductive binder may be polystyrene sulfonate (PSS), polyvinylidene fluoride-hexafluoropropylene (PVDF-HFP), polyvinyl fluoride (PVF), polyvinylidene fluoride (PVDF), polymethyl methacrylate (PMMA), polyethylene oxide (PEO), polyethylene glycol (PEG), polyacrylonitrile (PAN), polytetrafluoroethene (PTFE), polyethylene dioxythiophene (PEDOT), polypyrrole (PPY), polyacrylonitrile (PAN), polyaniline, polyacetylene, and/or the like.

For example, the ionically conductive binder may include a polar functional group. The ionically conductive binder including a polar functional group may be, for example, nafion, aquivion, flemion, gore, aciplex, morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi+), and/or the like. The electronically conductive binder may be, for example, polyacetylene, polythiophene, polypyrrole, poly(p-phenylene), poly(phenylenevinylene), poly(phenylenesulfide), polyaniline, and/or the like. The interlayers 200a, 200b, and 200 may be, for example, a conductive layer (e.g., an electrically conductive layer) including a conductive polymer (e.g., an electrically conductive polymer).

According to embodiments, the binder included in the interlayers 200a, 200b, and 200 may be selected from binders included in the dry electrode film 300a, 300b, and 300 to be further described herein below. For example, the interlayers 200a, 200b, and 200 may include the same binder as the binder included in the dry electrode films 300a, 300b, and 300 to be further described herein below. For example, the binder included in the interlayers 200a, 200b, and 200 may be a fluorine-based binder.

According to embodiments, the fluorine-based binder included in the interlayers 200a, 200b, and 200 may be polyvinylidene fluoride (PVDF). The interlayers 200a, 200b, and 200 are provided, for example, on the electrode current collector 100, for example, in a dry or wet manner. The interlayers 200a, 200b, and 200 may be, for example, a binding layer including a binder.

According to embodiments, the interlayers 200a, 200b, and 200 may further include, for example, a carbon-based conductive material (e.g., a carbon-based electrically conductive material). The carbon-based conductive material included in the interlayers 200a, 200b, and 200 may be selected from carbon-based conductive materials included in the dry electrode films 300a, 300b, and 300. The interlayers 200a, 200b, and 200 may include the same carbon-based conductive material as the carbon-based conductive material included in an electrode active material layer. Because the interlayers 200a, 200b, and 200 include a carbon-based conductive material, the interlayers 200a, 200b, and 200 may be, for example, a conductive layer. The interlayers 200a, 200b, and 200 may be, for example, a conductive layer (e.g., an electrically conductive layer) including a binder and a carbon-based conductive material (e.g., a carbon-based electrically conductive material).

The interlayers 200a, 200b, and 200 may be provided, for example, on the electrode current collector 100 in a dry manner by deposition such as CVD, PVD, and/or the like. The interlayers 200a, 200b, and 200 may be provided, for example, on the electrode current collector 100 in a wet manner by coating such as spin coating, dip coating, and/or the like. The interlayers 200a, 200b, and 200 may be on the electrode current collector 100 by depositing, for example, a carbon-based conductive material on the electrode current collector 100 by deposition.

The dry-coated interlayers 200a, 200b, and 200 may be made of a carbon-based conductive material (e.g., a carbon-based electrically conductive material) and may not include a binder. In some embodiments, the interlayers 200a, 200b, and 200 may be on the electrode current collector 100 by coating and drying a composition including, for example, a carbon-based conductive material (e.g., a carbon-based electrically conductive material), a binder, and a solvent on the surface of the electrode current collector 100. The interlayers 200a, 200b, and 200 may have a single-layered structure or a multi-layered structure including a plurality of layers.

According to embodiments, a composition of the inter-region 210 of the interlayer 200 may be the same as a composition of the outer peripheral region 220. In this embodiment, the interlayer 200 uses a single composition, and thus, the interlayers 200 may all be easily formed on the electrode current collector 100.

According to embodiments, the composition of the inter-region 210 of the interlayer 200 may be different from the composition of the outer peripheral region 220. In this embodiment, the strength of the outer peripheral region 220 of the interlayer 200 may be greater than the strength of the inter-region 210. In this regard, in the process of manufacturing the dry electrode 500, it is possible to more easily distinguish and remove the dry electrode film 300 exposed to the outside of the interlayer 200.

### Dry electrode film 300

Referring to FIG. 1A to FIG. 1D, the dry electrode films 300a, 300b, and 300 may be on the interlayer 200.

According to embodiments, a thickness of a region of the dry electrode films 300a, 300b, and 300 on the inter-region 210 may be greater than a thickness of a region of the dry electrode films 300a, 300b, and 300 on the outer peripheral region 220.

For example, the sum of the thickness of the region of the dry electrode films 300a, 300b, and 300 on the inter-region 210 and the thickness of the inter-region 210 may be the same as the sum of the thickness of the region of the dry electrode films 300a, 300b, and 300 on the outer peripheral region 220 and the thickness of the outer peripheral region 220. In this regard, the overall thickness of the manufactured dry electrode 500 may be constant (or substantially constant).

Referring to FIG. 1A to FIG. 1D, the dry electrode films 300a, 300b, and 300 may each be, for example, a self-standing film. The dry electrode films 300a, 300b, and 300 may each maintain, for example, a film form without a support. Therefore, the dry electrode films 300a, 300b, and 300 may be prepared as a separate self-standing film and then provided on the electrode current collector 100.

For example, the dry electrode films 300a, 300b, and 300 are manufactured in a dry manner, and thus, do not include a processing solvent intentionally added. For example, a residual processing solvent is not included in the dry electrode films 300a, 300b, and 300. An unintended trace amount of solvent may remain in the dry electrode films 300a, 300b, and 300, but the solvent is not a processing solvent intentionally added. Therefore, the dry electrode films 300a, 300b, and 300 manufactured from the dry electrode films 300a, 300b, and 300 are distinguished from a wet electrode active material layer manufactured by mixing together an electrode component and a processing solvent and then removing a part or all of the process solvent by drying.

The dry electrode films 300a, 300b, and 300 may include a dry electrode active material. The dry electrode active material may be, for example, an electrode active material that is not impregnated, dissolved, or dispersed in a processing solvent. The dry electrode active material may be, for example, an electrode active material that does not include a processing solvent or that does not come into contact with the processing solvent. The dry electrode active material may be, for example, an electrode active material that does not come into contact with the processing solvent in the process of manufacturing the dry electrode films 300a, 300b, and 300 and the dry electrode 500.

The dry electrode active material may be, for example, a dry positive electrode active material.

A positive electrode active material may be, for example, a lithium metal oxide. Any suitable positive electrode active material generally used in the art may be used without limitation.

For example, one or more types (or kinds) of composite oxides of lithium and a metal selected from cobalt, manganese, nickel, and/or a combination thereof may be used as the positive electrode active material, and an example thereof may be a compound represented by any of the following formulas: LiₐA_{1-b}B'_{b}D₂ (wherein 0.90 ≤ a ≤ 1 and 0 ≤ b ≤ 0.5); LiₐE_{1-b}B'_{b}O_{2-c}D_{c} (wherein 0.90 ≤ a ≤ 1, 0 ≤ b ≤ 0.5, and 0 ≤ c ≤ 0.05); LiE_{2-b}B'_{b}O_{4-c}D_{c} (wherein 0 ≤ b ≤ 0.5 and 0 ≤ c ≤ 0.05); LiₐNi_{1-b-c}Co_{b}B'_{c}Dₐ (wherein 0.90 ≤ a ≤ 1, 0 ≤ b ≤ 0.5, 0 ≤ c ≤ 0.05, and 0 < α ≤ 2); LiₐNi_{1-b-c}Co_{b}B'_{c}O_{2-α}F'_{α} (wherein 0.90 ≤ a ≤ 1, 0 ≤ b ≤ 0.5, 0 ≤ c ≤ 0.05, and 0 < α < 2); LiₐNi_{1-b-c}Co_{b}B'_{c}O_{2-α}F'₂ (wherein 0.90 ≤ a ≤ 1, 0 ≤ b ≤ 0.5, 0 ≤ c ≤ 0.05, and 0 < α < 2); LiₐNi_{1-b-c}Mn_{b}B'_{c}D_{α} (wherein 0.90 ≤ a ≤ 1, 0 ≤ b ≤ 0.5, 0 ≤ c ≤ 0.05, and 0 < α ≤ 2); LiₐNi_{1-b-c}Mn_{b}B'_{c}O₂₋ₐF'ₐ (wherein 0.90 ≤ a ≤ 1, 0 ≤ b ≤ 0.5, 0 ≤ c ≤ 0.05, and 0 < α < 2); LiₐNi_{1-b-c}Mn_{b}B'_{c}O₂₋ₐF'₂ (wherein 0.90 ≤ a ≤ 1, 0 ≤ b ≤ 0.5, 0 ≤ c ≤ 0.05, and 0 < α < 2); and LiₐNi_{b}E_{c}G_{d}O₂ (wherein 0.90 ≤ a ≤ 1, 0 ≤ b ≤ 0.9, 0 ≤ c ≤ 0.5, and 0.001 ≤ d ≤ 0.1); LiₐNi_{b}Co_{c}Mn_{d}GₑO₂ (wherein 0.90 ≤ a ≤ 1, 0 ≤ b ≤ 0.9, 0 ≤ c ≤ 0.5, 0 ≤ d ≤ 0.5, and 0.001 ≤ e ≤ 0.1); LiₐNiG_{b}O₂ (wherein 0.90 ≤ a ≤ 1 and 0.001 ≤ b ≤ 0.1); LiₐCoG_{b}O₂ (wherein 0.90 ≤ a ≤ 1 and 0.001 ≤ b ≤ 0.1); LiₐMnG_{b}O₂ (wherein 0.90 ≤ a ≤ 1 and 0.001 ≤ b ≤ 0.1); LiₐMn₂G_{b}O₄ (wherein 0.90 ≤ a ≤ 1 and 0.001 ≤ b ≤ 0.1); QO₂; QS₂; LiQS₂; V₂O₅; LiV₂O₅; Lil'O₂; LiNiVO₄; Li_{(3-f)}J₂(PO₄)₃(0 ≤ f ≤ 2); Li_{(3-f)}Fe₂(PO₄)₃(0 ≤ f ≤ 2); and LiFePO₄.

In the above-described Formulas representing a compound, A is Ni, Co, Mn, or a combination thereof; B' is Al, Ni, Co, Mn, Cr, Fe, Mg, Sr, V, a rare earth element, or a combination thereof; D is O, F, S, P, or a combination thereof; E is Co, Mn, or a combination thereof; F' is F, S, P, or a combination thereof; G is Al, Cr, Mn, Fe, Mg, La, Ce, Sr, V, or a combination thereof; Q is Ti, Mo, Mn, or a combination thereof; I' is Cr, V, Fe, Sc, Y, or a combination thereof; and J is V, Cr, Mn, Co, Ni, Cu, or a combination thereof.

A compound in which a coating layer is added to the surface of the above-described compounds may be used, and a mixture of the above-described compounds and the compound added with the coating layer may also be used. The coating layer added to the surface of the above-described compounds may include, for example, a coating element compound such as an oxide and/or hydroxide of a coating element, an oxyhydroxide of the coating element, an oxycarbonate of the coating element, or a hydroxycarbonate of the coating element. A compound constituting the coating layer may be amorphous and/or crystalline. The coating element included in the coating layer may be Mg, Al, Co, K, Na, Ca, Si, Ti, V, Sn, Ge, Ga, B, As, Zr, or a mixture thereof. A method for providing the coating layer may be selected from any suitable method that does not (e.g., substantially does not) adversely affect the physical properties of the positive electrode active material. The coating method may be, for example, a spray coating method, a dipping method, and/or the like. A detailed description of the coating method is not necessary here because it will be readily understood by those skilled in the art upon reviewing this disclosure.

The positive electrode active material may be, for example, a composite positive electrode active material.

The composite positive electrode active material may include, for example, a core including a lithium transition metal oxide, and a shell provided along the surface of the core, wherein the shell includes at least one first metal oxide represented by Formula MₐO_{b} (0<a≤3 and 0<b<4, wherein if a is 1, 2, or 3, b is not an integer), and graphene, wherein the first metal oxide is in a graphene matrix, and the M is at least one metal selected from Groups 2 to 13, 15, and 16 of the Periodic Table of Elements, and the lithium transition metal oxide contains nickel, wherein the content of nickel is about 80 mol% or greater with respect to the total number of moles of the transition metal. The shell including the first metal oxide and the graphene may be on the core of the composite positive electrode active material.

Due to agglomeration, it is difficult to uniformly coat other graphene on the core. For example, the composite positive electrode active material uses a composite including a plurality of first metal oxides in the graphene matrix, thereby allowing the shell to be uniformly (e.g., substantially uniformly) provided on the core while preventing or reducing the agglomeration of graphene. Therefore, by effectively blocking or reducing the contact between the core and an electrolyte solution, a side reaction caused by the contact between the core and the electrolyte is prevented or reduced. The reduction of nickel ions (Ni³⁺->Ni²⁺) and cation mixing caused by the electrolyte solution are suppressed or reduced, so that the generation of a resistance layer such as a NiO phase is suppressed or reduced. The elution of nickel ions is also suppressed or reduced. Because the shell including graphene has flexibility, changes in the volume of the composite positive electrode active material during charging and discharging are easily accommodated, thereby suppressing or reducing the occurrence of cracks inside the composite positive electrode active material. Because graphene has high electronic conductivity, the interfacial resistance between the composite positive electrode active material and the electrolyte solution is reduced. Therefore, despite the introduction of the shell including graphene, the internal resistance of a lithium battery is maintained or reduced. Because the first metal oxide has voltage resistance, the deterioration of the lithium transition metal oxide included in the core may be prevented or reduced during charging and discharging at high voltages. As a result, the cycle properties and high-temperature stability of a lithium battery including the composite positive electrode active material are improved. The shell may include, for example, one type (or kind) of first metal oxide or two or more types (or kinds) of different first metal oxides. In the composite positive electrode active material, the lithium transition metal oxide has a high nickel content of about 80 mol% or greater with respect to the total number of moles of the transition metal, and the shell including the first metal oxide and graphene is on the core, so that high discharge capacity and cycle properties may be concurrently (e.g., simultaneously) provided. Therefore, a composite positive electrode active material having a high nickel content of about 80 mol% or greater may provide improved capacity compared to a composite positive electrode active material having a relatively low nickel content, while still providing excellent lifespan properties. A metal included in the first metal oxide may be, for example, one or more selected from Al, Nb, Mg, Sc, Ti, Zr, V, W, Mn, Fe, Co, Pd, Cu, Ag, Zn, Sb, and Se.

The first metal oxide may be, for example, one or more selected from Al₂O_{z} (0<z<3), NbOₓ (0<x<2.5), MgOₓ (0<x<1), Sc₂O_{z} (0<z<3), TiO_{y} (0<y<2), ZrO_{y} (0<y<2), V₂O_{z} (0<z<3), WO_{y} (0<y<2), MnO_{y} (0<y<2), Fe₂O_{z} (0<z<3), Co₃O_{w} (0<w<4), PdOₓ (0<x<1), CuOₓ (0<x<1), AgOₓ (0<x<1), ZnOₓ (0<x<1), Sb₂O_{z} (0<z<3), and SeO_{y} (0<y<2). Because the first metal oxide as described above is in the graphene matrix, the uniformity of the shell on the core is improved, and the voltage resistance of the composite positive electrode active material is further improved. For example, the shell includes Al₂Oₓ (0<x<3) as the first metal oxide. The shell may further include one or more types (or kinds) of second oxide metal represented by Formula MₐO_{c} (0<a≤3 and 0<c≤4, wherein if a is 1, 2, or 3, c is an integer). M is one or more metals selected from Groups 2 to 13, 15 and 16 of the Periodic Table of Elements. For example, the second metal oxide includes the same metal as the metal included in the first metal oxide, and c/a, which the ratio of a and c of the second metal oxide has a greater value than b/a, which is the ratio of a and b of the first metal oxide. For example, c/a > b/a. The second metal oxide is selected from, for example, Al₂O₃, NbO, NbO₂, Nb₂O₅, MgO, Sc₂O₃, TiO₂, ZrO₂, V₂O₃, WO₂, MnO₂, Fe₂O₃, Co₃O₄, PdO, CuO, AgO, ZnO, Sb₂O₃, and SeO₂. The first metal oxide is a reduction product of the second metal oxide. The first metal oxide is obtained by reducing a part or all of the second metal oxide. Therefore, the first metal oxide has a lower oxygen content, and has a higher oxidation number of the metal than the second metal oxide. For example, the shell includes Al₂Oₓ (0<x<3), which is the first metal oxide, and Al₂O₃, which is the second metal oxide. In the composite positive electrode active material, for example, the graphene included in the shell and the transition metal of the lithium transition metal oxide included in the core are chemically bound through a chemical bond. A carbon atom C of the graphene included in the shell and a transition metal Me of the lithium transition metal oxide are chemically bound, for example, through a C-O-Me bond (e.g., C-O-Ni bond) using an oxygen atom as a medium (e.g., as a linking atom). The graphene included in the shell and the lithium transition metal oxide included in the core are chemically bonded through a chemical bond, so that the core and the shell are composited. Therefore, it is distinguished from a simple physical mixture of graphene and a lithium transition metal oxide. The first metal oxide and the graphene included in the shell are also chemically bound through a chemical bond. The chemical bond may be, for example, a covalent bond or an ionic bond. The covalent bond is a bond including, for example, at least one selected from an ester group, an ether group, a carbonyl group, an amide group, a carbonate anhydride group, and an acidic anhydride. The ionic bond is a bond including, for example, carboxylic acid ions, ammonium ions, acyl cation groups, and the like. The thickness of the shell is, for example, about 1 nm to about 5 µm, about 1 nm to about 1 µm, about 1 nm to about 500 nm, about 1 nm to about 200 nm, about 1 nm to about 100 nm, about 1 nm to about 90 nm, about 1 nm to about 80 nm, about 1 nm to about 70 nm, about 1 nm to about 60 nm, about 1 nm to about 50 nm, about 1 nm to about 40 nm, about 1 nm to about 30 nm, about 1 nm to about 20 nm, or about 1 nm to about 10 nm. Because the shell has a thickness in the above ranges, an increase in the internal resistance of the lithium battery including the composite positive electrode active material is suppressed or reduced.

The content of the composite included the composite positive electrode active material may be about 3 wt% or less, about 2 wt% or less, about 1 wt% or less, about 0.5 wt% or less, or about 0.2 wt% or less of the total weight of the composite positive electrode active material. The content of the composite may be about 0.01 wt% to about 3 wt%, about 0.01 wt% to about 1 wt%, about 0.01 wt% to about 0.7 wt%, about 0.01 wt% to about 0.6 wt%, about 0.01 wt% to about 0.5 wt%, about 0.01 wt% to about 0.2 wt%, about 0.01 wt% to about 0.1 wt%, or about 0.03 wt% to about 0.07 wt% of the total weight of the composite positive electrode active material. Because the composite positive electrode active material includes the composite in the above ranges, the cycle properties of the lithium battery including the composite positive electrode active material are further improved. The average particle diameter (e.g. D50) of one or more selected from the first metal oxide and the second metal oxide included in the composite may be about 1 nm to about 1 µm, about 1 nm to about 500 nm, about 1 nm to about 200 nm, about 1 nm to about 100 nm, about 1 nm to about 70 nm, about 1 nm to about 50 nm, about 1 nm to about 30 nm, about 3 nm to about 30 nm, about 3 nm to about 25 nm, about 5 nm to about 25 nm, about 5 nm to about 20 nm, or about 7 nm to about 20 nm. The first metal oxide and/or the second metal oxide has a particle diameter in the above nano-range, and thus, may be more uniformly distributed in the graphene matrix of the composite. Therefore, the composite may be uniformly (e.g., substantially uniformly) coated on the core without (or substantially without) agglomeration to form a shell. The first metal oxide and/or the second metal oxide has a particle diameter in the above ranges, and thus, may be more uniformly on the core. Therefore, because the first metal oxide and/or the second metal oxide is uniformly (e.g., substantially uniformly) provided on the core, voltage resistance properties may be more effectively exhibited. The average particle diameter of the first metal oxide and the second metal oxide may be measured by using, for example, a measuring device of laser diffraction and/or dynamic light scattering. The average particle diameter is measured by using, for example, a laser scattering particle size distribution meter (e.g., Horiba's LA-920), and is the value of the median particle size (D50) if 50% is accumulated from the small particle side in volume conversion.

The core included in the composite positive electrode active material may include, for example, a lithium transition metal oxide represented by Formulas 1 to 8 below:

Formula 1 LiₐCoₓM_{y}O_{2-b}A_{b}

in Formula 1 above, 1.0≤a≤1.2, 0≤b≤0.2, 0.9≤x≤1, 0≤y≤0.1, and x+y=1,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A is F, S, Cl, Br, or a combination thereof, and

   Formula 2 LiₐNiₓCo_{y}M_{z}O_{2-b}A_{b}
in Formula 2 above, 1.0≤a≤1.2, 0≤b≤0.2, 0.8≤x<1, 0≤y≤0.3, 0<z≤0.3, and x+y+z=1,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A is F, S, Cl, Br, or a combination thereof, and

   Formula 3 LiNiₓCo_{y}Mn_{z}O₂

   Formula 4 LiNiₓCo_{y}Al_{z}O₂
in Formulas 3 and 4, 0.8≤x≤0.95, 0≤y≤0.2, 0<z≤0.2, and x+y+z=1,

   Formula 5 LiNiₓCo_{y}Mn_{z}Al_{w}O₂
in Formula 5 above, 0.8≤x≤0.95, 0≤y≤0.2, 0<z≤0.2, 0<w≤0.2, and x+y+z+w=1,

   Formula 6 LiₐNiₓMn_{y}M'_{z}O_{2-b}A_{b}
in Formula 6 above, 1.0≤a≤1.2, 0≤b≤0.2, 0<x≤0.3, 0.5≤y<1, 0<z≤0.3, and x+y+z=1,
M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and A is F, S, Cl, Br, or a combination thereof, and

   Formula 7 LiₐM1ₓM2_{y}PO_{4-b}X_{b}
in Formula 7 above, 0.90≤a≤1.1, 0≤x≤0.9, 0≤y≤0.5, 0.9<x+y<1.1, and 0≤b≤2,
M1 is chromium (Cr), manganese (Mn), iron (Fe), cobalt (Co), nickel (Ni), copper (Cu), zirconium (Zr), or a combination thereof,
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or a combination thereof, and X is O, F, S, P, or a combination thereof.

   Formula 8 LiₐM3_{z}PO₄
in Formula 8 above, 0.90≤a≤1.1, and 0.9≤z≤1.1,
M3 is chromium (Cr), manganese (Mn), iron (Fe), cobalt (Co), nickel (Ni), copper (Cu), zirconium (Zr) or a combination thereof.

The dry electrode active material may be, for example, a dry negative electrode active material.

The negative electrode active material may be any suitable negative electrode active material used as a negative electrode active material of a lithium battery in the art. For example, one or more selected from the group consisting of a lithium metal, a metal alloyable with lithium, a transition metal oxide, a non-transition metal oxide, and a carbon-based material may be included. The metal alloyable with lithium may be, for example, Si, Sn, Al, Ge, Pb, Bi, Sb, an Si-Y alloy (wherein the Y is an alkali metal, an alkali earth metal, a Group 13 element, a Group 14 element, a transition metal, a rare earth element, or a combination thereof, but not Si), an Sn-Y alloy (wherein the Y is an alkali metal, an alkali earth metal, a Group 13 element, a Group 14 element, a transition metal, a rare earth element, or a combination thereof, but not Sn), and/or the like. The element Y may be, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Ti, Ge, P, As, Sb, Bi, S, Se, Te, or a combination thereof). The transition metal oxide may be, for example, lithium titanium oxide, vanadium oxide, lithium vanadium oxide, and/or the like. The non-transition metal oxide may be, for example, SnO₂, SiOₓ (0<x≤2), and/or the like. The carbon-based material may be, for example, crystalline carbon, amorphous carbon, or a mixture thereof. The crystalline carbon may be, for example, graphite such as amorphous, plate-shaped, flake-shaped, spherical, and/or fibrous natural graphite and/or artificial graphite. The amorphous carbon may be, for example, soft carbon (low-temperature fired carbon) and/or hard carbon, mesophase pitch carbide, fired coke, and/or the like.

The dry electrode films 300a, 300b, and 300 include, for example, a dry binder. The dry binder may be, for example, a binder that is not impregnated, dissolved, or dispersed in a processing solvent. The dry binder may be, for example, a binder that does not include a processing solvent or does not come into contact with the processing solvent. The dry binder may be, for example, a binder that does not come into contact with a processing solvent in the process of manufacturing the dry electrode films 300a, 300b, and 300 and the dry electrode. The dry binder may be, for example, a fibrillized binder. The fibrillized binder may serve as a matrix that supports and binds the dry electrode active material and other components included in the dry electrode films 300a, 300b, and 300. It can be confirmed that the fibrillized binder has a fibrous form, for example, from a scanning electron microscope image of the cross-section of the electrode. The fibrillized binder may have an aspect ratio of, for example, about 10 or greater, about 20 or greater, about 50 or greater, or about 100 or greater. The "aspect ratio" used herein may refer to the average aspect ratio and may be determined from SEM images.

The dry binder may be, but is not limited to, polytetrafluoroethylene (PTFE), polyvinylidene fluoride-hexapropylene (PVDF-HFP) copolymer, polyvinylidene fluoride (PVDF), polyvinyl alcohol, polyacrylonitrile, carboxymethyl cellulose (CMC), starch, hydroxypropyl cellulose, cellulose, polyvinylpyrrolidone, polyethylene, polypropylene, ethylene-propylene-diene polymer (EPDM), sulfonated-EPDM, styrene butadiene rubber (SBR), fluorine rubber, and/or a copolymer thereof, but may be any suitable binder used in the manufacture of the dry electrode 500. For example, the dry binder may include a fluorine-based binder. The fluorine-based binder may be, for example, polytetrafluoroethylene (PTFE), polyvinylidene fluoride-hexapropylene (PVDF-HFP) copolymer, and/or polyvinylidene fluoride (PVDF).

The content of the dry binder included in the dry electrode films 300a, 300b, and 300 may be, for example, about 1 wt% to about 10 wt%, or about 1 wt% to about 5 wt% with respect to the total weight of the dry electrode films 300a, 300b, and 300. Because the dry electrode films 300a, 300b, and 300 include the dry binder in the above ranges, the binding force of the dry electrode films 300a, 300b, and 300 is improved, and the manufactured dry electrode 500 may maintain a high energy density.

The dry electrode films 300a, 300b, and 300 may further include, for example, a conductive material (e.g., an electrically conductive material). The conductive material may be, for example, a dry conductive material (e.g., a dry electrically conductive material). The dry conductive material may be, for example, a conductive material (e.g., an electrically conductive material) that is not impregnated, dissolved, or dispersed in a processing solvent. The dry conductive material may be, for example, a conductive material (e.g., an electrically conductive material) that does not include a processing solvent or does not come into contact with the processing solvent. The dry conductive material includes, for example, a carbon-based conductive material (e.g., a carbon-based electrically conductive material). The carbon-based conductive material may be, but is not limited to, Denka black, carbon black, graphite fine particles, natural graphite, artificial graphite, acetylene black, Ketjen black, carbon fiber, carbon nanotubes, and/or the like, and may be any suitable carbon-based conductive material used in the art.

The content of the dry conductive material included in the dry electrode films 300a, 300b, and 300 may be, for example, about 1 wt% to about 10 wt%, or about 1 wt% to about 5 wt% with respect to the total weight of the electrode active material layer. Because the dry electrode films 300a, 300b, and 300 include the dry conductive material in the above ranges, the conductivity (e.g., the electrical conductivity) of the manufactured dry electrode 500 is improved, and the cycle properties of the lithium battery including the dry electrode 500 may be improved.

### Electrode current collector 100

Materials constituting the electrode current collector 100 may be materials that do not react with lithium, e.g., materials that do not form an alloy or compound with lithium and are conductive. The electrode current collector 100 is, for example, a metal and/or alloy. The electrode current collector 100 may be made of, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), and/or an alloy thereof.

The electrode current collector 100 may have a form selected from, for example, a sheet, a foil, a film, a plate body, a porous body, a mesoporous body, a through-hole-containing body, a polygonal ring body, a mesh body, a foam body, and a non-woven fabric body, but is not necessarily limited to such a form, and may be any suitable form used in the art.

The electrode current collector 100 may have a reduced thickness compared to an electrode current collector 100 included in another electrode. Therefore, the electrode according to embodiments includes a thin-film current collector, and thus, is distinguished from another electrode including a thick-film current collector. Because the electrode according to embodiments may adopt a thin-film current collector having a reduced thickness, the thickness of an electrode active material layer may be relatively increased in the electrode including the thin-film current collector. As a result, the energy density of a lithium battery which adopts the electrode increases. The thickness of the electrode current collector 100 may be, for example, about less than 15 µm, about 14.5 µm or less, or about 14 µm or less. The thickness of the electrode current collector 100 may be, for example, about 0.1 µm to about less than 15 µm, about 1 µm to about 14.5 µm, about 2 µm to about 14 µm, about 3 µm to about 14 µm, about 5 µm to about 14 µm, or about 10 µm to about 14 µm.

The electrode current collector 100 has a reduced surface roughness compared to the electrode current collector 100 included in other electrodes. Because the surface of the electrode current collector 100 may have a reduced surface roughness, the electrode current collector 100 may form a uniform (e.g., substantially uniform) interface with the electrode active material layer and/or the interlayers 200a, 200b, and 200. As a result, local side reactions and/or non-uniform electrode reactions are suppressed or reduced at the interface of the electrode current collector 100 and other layers, and the cycle properties of the lithium battery including the electrode are improved.

A maximum roughness depth Rₘₐₓ of the surface of the electrode current collector 100 may be, for example, about 3 µm or less, about 2 µm or less, about 1 µm or less, about 0.5 µm or less, or about 0.1 µm or less. The maximum roughness depth Rₘₐₓ of the surface of the electrode current collector 100 may be, for example, about 10 nm to about 3 µm, about 10 nm to about 2 µm, about 10 nm to about 1 µm, about 10 nm to about 0.5 µm, or about 10 nm to about 0.1 µm.

A mean roughness Rₐ of the surface of the electrode current collector 100 may be, for example, about 2 µm or less, about 1 µm or less, about 0.5 µm or less, or about 0.1 µm or less. The mean roughness Rₐ of the surface of the electrode current collector 100 may be, for example, about 10 nm to about 2 µm, about 10 nm to about 1 µm, about 10 nm to about 0.5 µm, or about 10 nm to about 0.1 µm.

A root mean square (RMS) roughness R_{q} of the surface of the electrode current collector 100 may be, for example, about 2 µm or less, about 1 µm or less, about 0.5 µm or less, or about 0.1 µm or less. The root mean square (RMS) roughness R_{q} of the surface of the electrode current collector 100 may be, for example, about 10 nm to about 2 µm, about 10 nm to about 1 µm, about 10 nm to about 0.5 µm, or about 10 nm to about 0.1 µm.

The electrode current collector 100 may include, for example, a base film and a metal layer on one side or two opposing sides of the base film. The electrode current collector 100 may include a substrate, and the substrate may have, for example, a structure including a base film and a metal layer on one side or two opposing sides of the base film. The above-described interlayer may be additionally on the metal layer. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. Because the base film includes the thermoplastic polymer, the base film may melt in the event of a short circuit and suppress or reduce a rapid increase in the current. The base film may be, for example, an insulator (e.g., an electrical insulator). The metal layer may include, for example, copper (Cu), stainless steel, titanium (Ti), iron (Fe), cobalt (Co), nickel (Ni), and/or an alloy thereof. The metal layer acts as an electrochemical fuse and may be cut in the event of an overcurrent to perform a short-circuit prevention function. The limit current and the maximum current may be adjusted by adjusting the thickness of the metal layer. The metal layer may be plated and/or deposited on the base film. If the thickness of the metal layer is reduced, the limit current and/or the maximum current of the electrode current collector 100 is reduced, so that the stability of the lithium battery in the event of a short circuit may be improved. A lead tab may be added on the metal layer for external connection. The lead tab may be welded to the metal layer or the metal layer/base film laminate by ultrasonic welding, laser welding, spot welding, and/or the like. During welding, the base film and/or metal layer may melt and the metal layer may be electrically connected to the lead tab. To make welding between the metal layer and the lead tab more robust, a metal chip may be added between the metal layer and the lead tab. The metal chip may be a chip of the same material as the metal of the metal layer. The metal chip may be, for example, metal foil and/or metal mesh. The metal chip may be, for example, aluminium foil, copper foil, and/or SUS foil. By providing the metal chip on the metal layer and welding the same to the lead tab, the lead tab may be welded to the metal chip/metal layer laminate or the metal chip/metal layer/base film laminate. During welding, the metal layer or the metal layer/metal chip laminate may be electrically connected to the lead tab while the base film, the metal layer, and/or the metal chip are melted. A metal chip and/or a lead tab may be added onto a portion of the metal layer. The thickness of the base film may be, for example, about 1 µm to about 50 µm, about 1.5 µm to about 50 µm, about 1.5 µm to about 40 µm, or about 1 µm to about 30 µm. Because the base film may have a thickness in the above ranges, the weight of the electrode assembly may be more effectively reduced. The melting point of the base film may be, for example, about 100 °C to about 300 °C, about 100 °C to about 250 °C, or about 100 °C to about 200 °C. Because the base film may have a melting point in the above ranges, the base film may be melted and easily coupled to the lead tab in the process of welding the lead tab. Surface treatment such as corona treatment may be performed on the base film in order to improve adhesion between the base film and the metal layer. The thickness of the metal layer may be, for example, about 0.01 µm to about 3 µm, about 0.1 µm to about 3 µm, about 0.1 µm to about 2 µm, or about 0.1 µm to about 1 µm. Because the metal layer may have a thickness in the above ranges, stability of the electrode assembly may be ensured while conductivity (e.g., electrical conductivity) is maintained. The thickness of the metal chip may be, for example, about 2 µm to about 10 µm, about 2 µm to about 7 µm, or about 4 µm to about 6 µm. Because the metal chip may have a thickness in the above ranges, connection between the metal layer and the lead tab may be more easily performed. Because the electrode current collector 100 may have a structure as described above, it is possible to reduce the weight of the electrode and consequently improve the energy density. The electrode current collector 100 may be, for example, a positive electrode current collector. The electrode current collector 100 may be, for example, a negative electrode current collector.

Referring to FIG. 1A to FIG. 1D, the area of the interlayers 200a, 200b, and 200 (e.g. in a plan view, such as a view in a stacking or thickness direction of the dry electrode) may be smaller than the area of the electrode current collector 100 (e.g. in a plan view, such as a view in a stacking or thickness direction of the dry electrode). The electrode current collector 100 may be free of the dry electrode films 300a, 300b, and 300 directly thereon.

### Method for manufacturing dry electrode

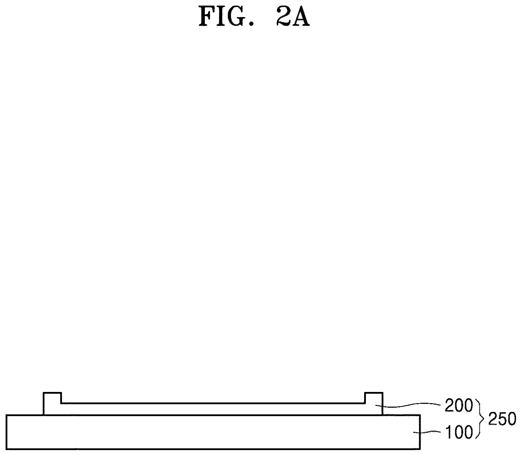

Referring to FIG. 2A to FIG. 2D, FIG. 3A to FIG. 3D, FIG. 4A and FIG. 4B, a method for manufacturing a dry electrode according to embodiments is further described.

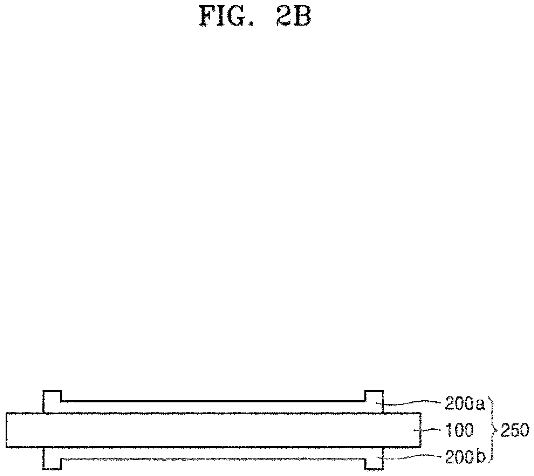

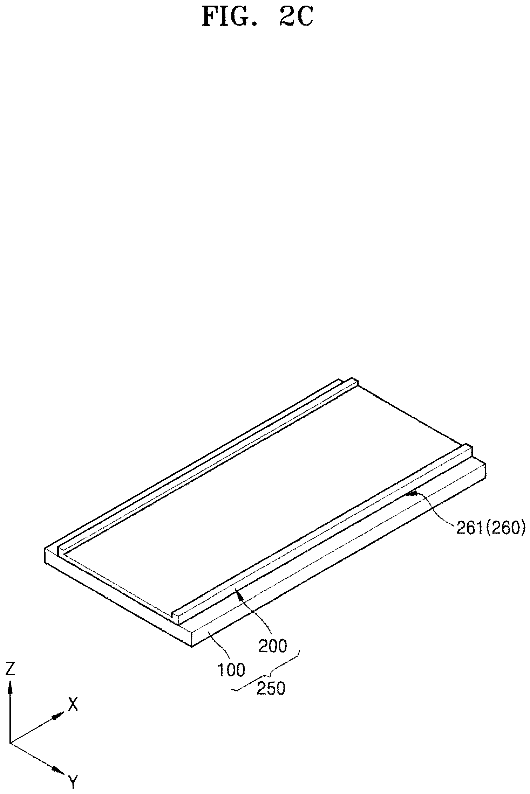

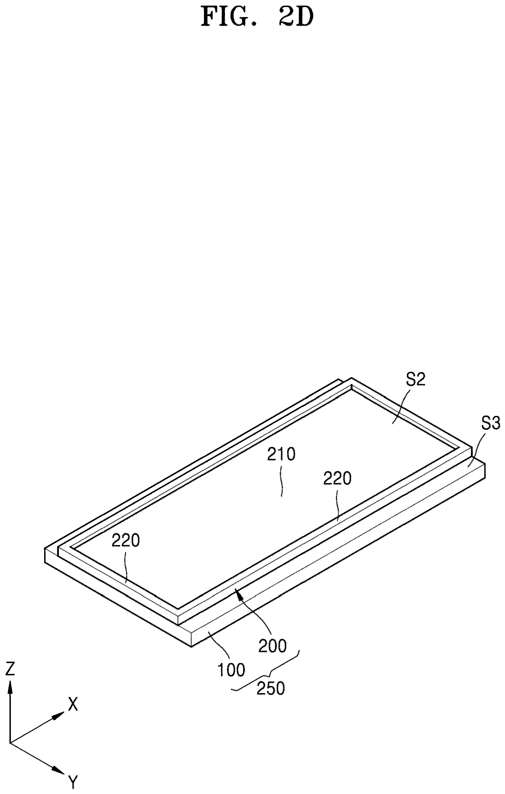

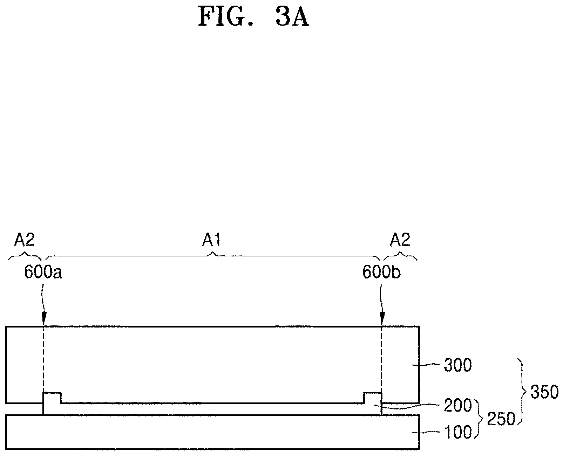

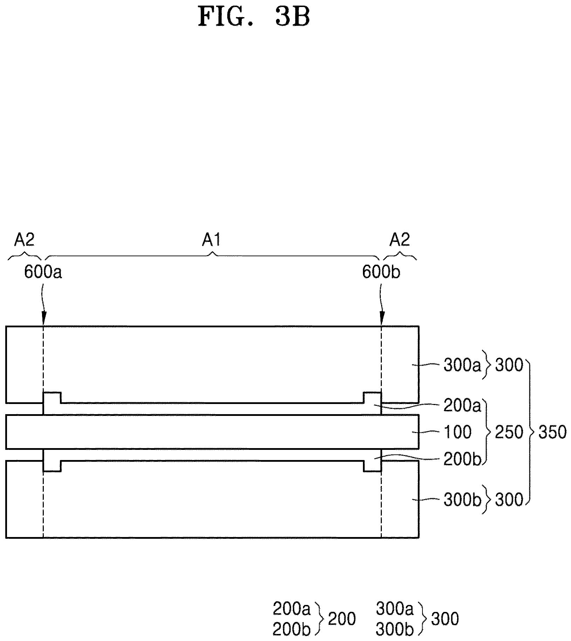

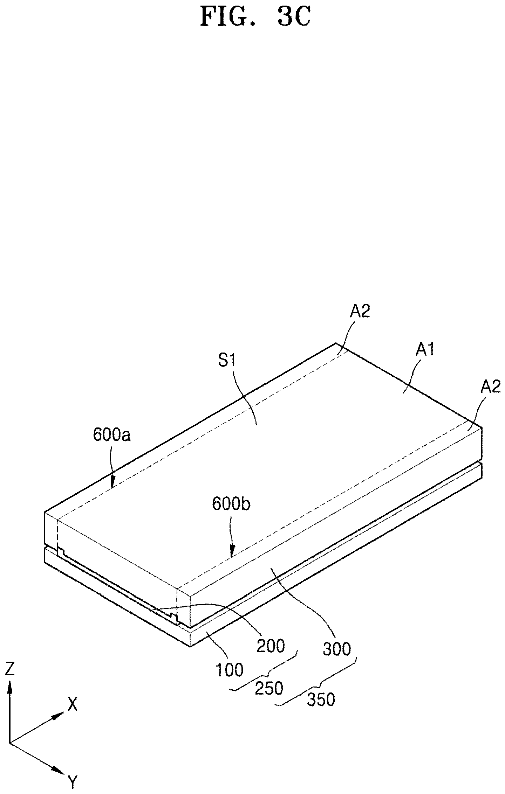

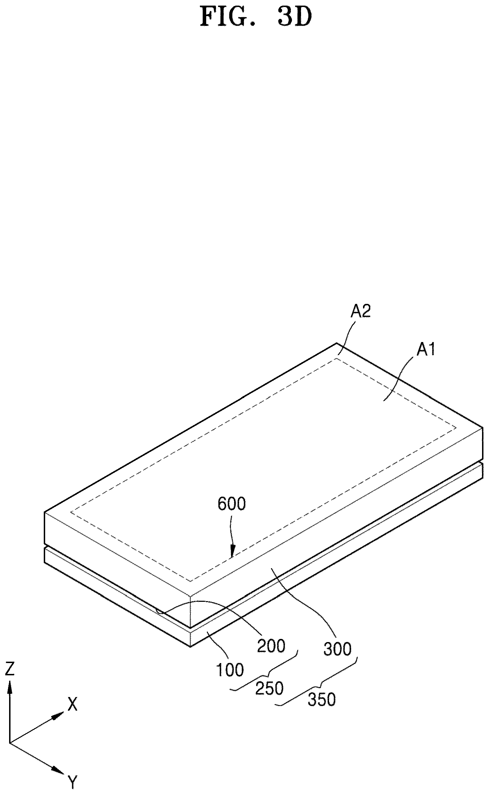

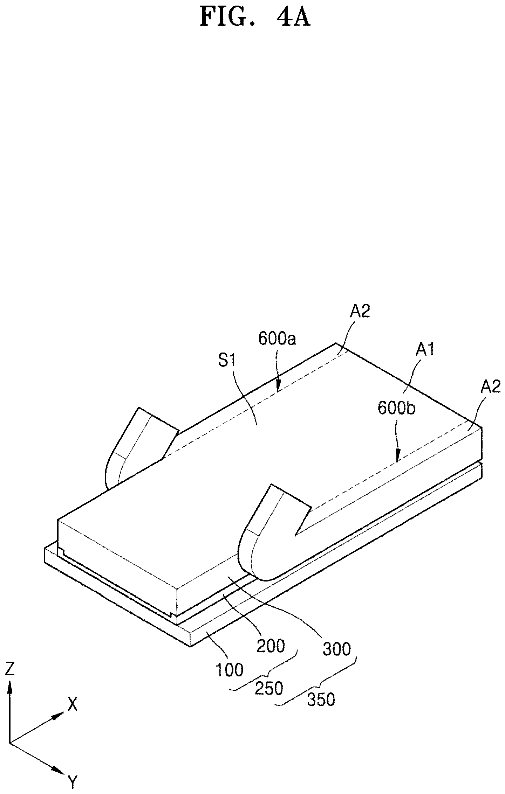

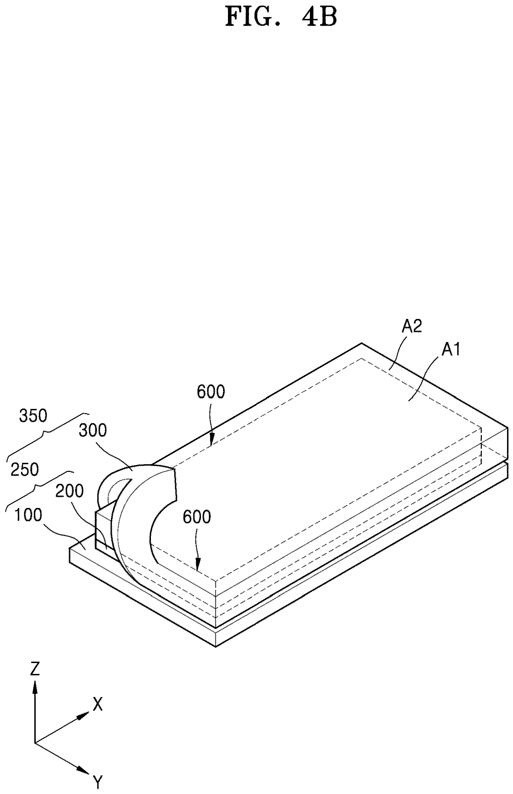

FIG. 2A and FIG. 2B are cross-sectional views of a first assembly according to embodiments. FIG. 2C and FIG. 2D are perspective views of a first assembly according to embodiments. FIG. 3A and FIG. 3B are cross-sectional views of a second assembly according to embodiments. FIG. 3C and FIG. 3D are perspective views of a second assembly according to embodiments. FIG. 4A and FIG. 4B are perspective views of a second assembly according to embodiments.

Referring to FIG. 2A to FIG. 2D, first, one or more interlayers 200a, 200b, and 200 are on one side or two opposing sides of an electrode current collector 100 to prepare a first laminate 250. The interlayers 200a, 200b, and 200 may be on one side of the electrode current collector 100 or may be respectively on two opposing sides of the electrode current collector 100 facing away from each other. The interlayers 200a, 200b, and 200 may be on a portion or all of one side or two opposing sides of the electrode current collector 100. The interlayers 200a, 200b, and 200 may cover a portion or all of the surface of the electrode current collector 100 on one side of the electrode current collector 100. The interlayers 200a, 200b, and 200 may cover a portion or all of the surface of the electrode current collector 100 on two opposing sides of the electrode current collector 100. In this embodiment, the interlayer 200 includes an outer peripheral region 220 provided along at least a portion of an outer periphery 260 of the interlayer and an inter-region 210 excluding the outer peripheral region 220, wherein the thickness of the outer peripheral region 220 may be greater than the thickness of the inter-region 210.

The first laminate 250 may be manufactured by, for example, the following method.

The process of providing one or more interlayers 200a, 200b, and 200 on one side or two opposing sides of the electrode current collector 100 to prepare the first laminate 250 includes, for example, providing the electrode current collector 100, and providing the interlayers 200a, 200b, and 200 on one side or two opposing sides of the electrode current collector 100. For materials of the electrode current collector 100, reference is made to the electrode current collector 100 section described above. The positive electrode current collector may be, for example, aluminium foil. The negative electrode current collector may be, for example, copper foil. The process of providing one or more interlayers 200a, 200b, and 200 on one side or two opposing sides of the electrode current collector 100 is to provide the interlayers 200a, 200b, and 200 on one side or two opposing sides of the electrode current collector 100 in a dry or wet manner. Dry coating, for example, coats a carbon-based conductive material (e.g., a carbon-based electrically conductive material) and/or a precursor thereof on one side or two opposing sides of the electrode current collector 100 by deposition and/or the like. Deposition is performed at a temperature of room temperature to a high temperature and at a pressure of atmospheric pressure to vacuum. The interlayers 200a, 200b, and 200 provided by the dry coating may not include a binder if the interlayers 200a, 200b, and 200 are made of a carbon-based conductive material (e.g., a carbon-based electrically conductive material). Wet coating, for example, coats a carbon-based conductive material (e.g., a carbon-based electrically conductive material) and a composition including a binder on one side or two opposing sides of the electrode current collector 100. The composition includes, for example, a carbon-based conductive material (e.g., a carbon-based electrically conductive material), a binder, and a processing solvent. The carbon-based conductive material and the binder refer to the electrode section described above. The processing solvent may be selected from solvents used for preparing an electrode slurry. The processing solvent is removed by drying after the composition is coated on the electrode current collector 100. A coating method is not limited to spin coating, dip coating, and the like, and may be any suitable coating method used in the art.

For example, a method for providing the outer peripheral region 220 in the interlayer 200 is not limited, and may be applied without limitation as long as it is possible to form the thickness of the outer peripheral region 220 to be greater than the thickness of the inter-region 210. For example, the interlayer 200 may be formed by coating one type (or kind) of interlayer-providing composition on the electrode current collector 100. In this embodiment, in order to form the outer peripheral region 220, a relatively excessive amount of the interlayer-providing composition may be applied along the outer periphery 260 of the interlayer to form the outer peripheral region 220.

For example, the interlayer 200 may be formed by using two types (or kinds) of interlayer-providing compositions. In this embodiment, a first interlayer-providing composition may be applied along the outer periphery 260 to form the outer peripheral region 220, and then a second interlayer-providing composition may be applied on the remaining region excluding the portion in which the outer peripheral region was formed to form the inter-region 210.

Referring to FIG. 3A to FIG. 3D, dry electrode films 300a, 300b, and 300 having a larger area than the area of the interlayers 200a, 200b, and 200 are on the first laminate 250 to prepare a second laminate 350. The dry electrode films 300a, 300b, and 300 include a first region A1 on the interlayers 200a, 200b, and 200 and a second region A2 extending from the first region A1 beyond an outer periphery of the interlayers 200a, 200b, and 200. The second region A2 of the dry electrode films 300a, 300b, and 300 is, for example, a region free of the interlayers 200a, 200b, and 200 between the dry electrode films 300a, 300b, and 300 and the electrode current collector 100. The second region A2 of the dry electrode films 300a, 300b, and 300 is, for example, a region of the dry electrode films 300a, 300b, and 300 that does not come into contact with the interlayers 200a, 200b, and 200. The dry electrode films 300a, 300b, and 300 having a larger area than the area of the interlayers 200a, 200b, and 200 are on the first laminate 250, and then, the second laminate 350 may be prepared by, for example, roll-pressing. The dry electrode films 300a, 300b, and 300 are provided and then roll-pressed on one side or two opposing sides of the first laminate 250 to prepare the second laminate 350 in which the dry electrode films 300a, 300b, 300 are on one side or two opposing sides of the first laminate 250. For example, the dry electrode films 300a, 300b, and 300 may be provided and then roll-pressed on one side of the first laminate 250 to prepare the second laminate 350 of the structure disclosed in FIG. 3A. For example, the dry electrode films 300a, 300b, and 300 may be respectively provided and then roll-pressed on two opposing sides of the first laminate 250 to prepare the second laminate 350 of the structure disclosed in FIG. 3B. The roll-pressing may be, for example, roll-pressing, flat pressing, and/or the like, but is not necessarily limited thereto. The pressure during the roll-pressing may be, for example, about 1.0 ton/cm² to about 10.0 ton/cm². If the pressure during the roll-pressing excessively increases, the electrode current collector 100 may be cracked. If the pressure during the roll-pressing is too low, the binding force between the electrode current collector 100 and the dry electrode films 300a, 300b, and 300 may be too low.

Referring to FIG. 3A to FIG. 3D and FIG. 4A to FIG. 4B, the dry electrode films 300a, 300b, and 300 may further include cut lines 600a, 600b, and 600 provided along a boundary between the first region A1 and the second region A2, for example, at least a portion of the boundary. Because the dry electrode films 300a, 300b, and 300 further include the cut lines 600a, 600b, and 600, the second region A2 may be more effectively and easily separated from the first region A1. The cut lines 600a, 600b, and 600 may be, for example, line regions cut in advance successively or intermittently along the boundary between the first region A1 and the second region A2.

For example, because the outer peripheral region 220 of the interlayer 200 is provided along the outer periphery 260 of the interlayer 200, the cut lines 600a, 600b, and 600 may be formed on at least a portion of the boundary between the first region A1 and the second region A2 in the process of providing and roll-pressing the dry electrode films 300a, 300b, and 300 on the first laminate 250. In dry electrode films 300a, 300b, and 300, the cut lines 600a, 600b, and 600 may be provided, for example, along at least a portion of the outer periphery of the interlayers 200a, 200b, and 200. Because the cut lines 600a, 600b, and 600 may be provided along at least a portion of the outer periphery of the interlayers 200a, 200b, and 200, a process of introducing the cut lines 600a, 600b, and 600 into the dry electrode films 300a, 300b, and 300 may be simplified. As a result, a process of manufacturing a dry electrode 500 may be simplified. For example, because the cut lines 600a, 600b, and 600 are provided along a portion of the outer periphery of the interlayers 200a, 200b, and 200, the dry electrode films 300a, 300b, and 300 may be easily prepared in a simple process. For example, the cut lines 600a, 600b, and 600 may be provided along the entirety of the outer periphery of the interlayers 200a, 200b, and 200. Because the cut lines 600a, 600b, and 600 may be provided along the entirety of the outer periphery of the interlayers 200a, 200b, and 200, the second region A2 can be more effectively separated from the first region A1. For example, the cut lines 600a, 600b, and 600 may be provided along the entirety of the outer periphery of the interlayers 200a, 200b, and 200, the dry electrode films 300a, 300b, and 300 having various suitable types (or kinds) of patterns may be easily prepared.

The length of perforations of the cut lines 600a, 600b, 600 may be about 40% or less, about 35% or less, or about 30% or less of the total length of the boundary between the first region A1 and the second region A2, for example. The length of the cut lines 600a, 600b, and 600 may be, for example, about 40% or less, about 35% or less, or about 30% or less of the total length of the outer periphery of the interlayers 200a, 200b, and 200. The length of the cut lines 600a, 600b, and 600 may be, for example, about 40% or less, about 35% or less, or about 30% or less of the total length of the dry electrode films 300a, 300b, and 300 in a machine direction. The length of the cut lines 600a, 600b, and 600 may be, for example, about 40% or less, about 35% or less, or about 30% or less of the total length of the dry electrode films 300a, 300b, and 300 in a transverse direction. For example, if the dry electrode films 300a, 300b, and 300 include the cut lines 600a, 600b, and 600, a portion of the second region A2 is pulled along the cut lines 600a, 600b, and 600 and separated from the first region A1, so that the manufacture of the dry electrode 500 may be more easily performed.

Referring to FIG. 4A and FIG. 4B, at least a portion of the second region A2 of the dry electrode films 300a, 300b, and 300 is pulled to separate the second region A2 from the first region A1, thereby providing the dry electrode 500. For example, at one end of the dry electrode films 300a, 300b, and 300, a portion of the second region A2 is folded at an angle of about 90 degrees to about 180 degrees and then pulled to separate the second region A2 from the first region A1. Because the dry electrode films 300a, 300b, and 300 have an anisotropic tensile strength, the second region A2 is selectively separated from the dry electrode films 300a, 300b, and 300. Because the second region A2 is selectively separated from the first region A1 of the dry electrode films 300a, 300b, and 300, the dry electrode 500 may be prepared.

Referring to FIG. 4A, the dry electrode films 300a, 300b, and 300 include the first region A1 and the second region A2, and the second region A2 may be, for example, separated from the first region A1 along a machine direction MD of the dry electrode films 300a, 300b, and 300. For example, the second region A2 may be separated from the first region A1 along the cut lines 600a and 600b provided along the machine direction MD of the dry electrode films 300a, 300b, and 300.

The machine direction is a direction in which the dry electrode films 300a, 300b, and 300 are stretched during the manufacturing of the dry electrode films 300a, 300b, and 300. Referring to FIG. 4A and FIG. 4B, the machine direction is, for example, an x-axis direction. The direction in which an electrode film is stretched may be confirmed from an electron microscope image of the surface or cross-section of the dry electrode films 300a, 300b, and 300. For example, a direction in which a stretched binder is oriented on the surface or cross-section of a dry electrode film may be the machine direction of the dry electrode films 300a, 300b, and 300. The stretched binder includes, for example, a fibrillized binder. A direction in which the fibrillized binder is oriented may be, for example, the machine direction of the dry electrode films 300a, 300b, and 300. A direction perpendicular to the machine direction is a transverse direction. Referring to FIG. 4A and FIG. 4D, the transverse direction is, for example, a y-axis direction. Because the second region A2 is separated from the first region A1 along the machine direction of the dry electrode films 300a, 300b, and 300, the second region A2 may be more easily separated from the dry electrode films 300a, 300b, and 300.

Referring to FIG. 4B, the dry electrode films 300a, 300b, and 300 include the first region A1 and the second region A2, and the second region A2 may be, for example, separated from the first region A1 along the outer periphery of the interlayers 200a, 200b, and 200. For example, the second region A2 may be separated from the first region A1 along the cut line 600 provided along the outer periphery of the interlayers 200a, 200b, and 200.

Because the second region A2 is separated from the first region A1 along the outer periphery of the interlayers 200a, 200b, and 200, the dry electrode films 300a, 300b, and 300 may be selectively on the interlayers 200a, 200b, and 200. Depending on the position and/or shape of the interlayers 200a, 200b, and 200, the position and/or shape of the dry electrode films 300a, 300b, and 300 on the interlayers 200a, 200b, and 200 may be selected.

For example, on the interlayers 200a, 200b, and 200 having a rectangular shape, the dry electrode films 300a, 300b, and 300 having the same shape as the shape of the interlayers 200a, 200b, and 200 and having a larger area than the area of the same are provided, and the dry electrode films 300a, 300b, and 300 include the first region A1 of the same shape and area as those of the interlayers 200a, 200b, and 200 and the second region A2 extending from the first region A1 beyond the outer periphery 260 of the interlayers 200a, 200b, and 200 and provided around the first region A1. The second region A2 of the dry electrode films 300a, 300b, and 300 is pulled, so that the second region A2 is selectively separated from the first region A1 along the outer periphery of the interlayers 200a, 200b, and 200, and the dry electrode films 300a, 300b, and 300 having the same shape and area as those of the interlayers 200a, 200b, and 200 are on the interlayers 200a, 200b, and 200.

Referring to FIG. 2D, FIG. 3C, and FIG. 4A, the dry electrode films 300a, 300b, and 300 may have, for example, a first area S1 (e.g. in a plan view, such as a view in a stacking or thickness direction of the dry electrode). The interlayers 200a, 200b, and 200 may have, for example, a second area S2 (e.g. in a plan view, such as a view in a stacking or thickness direction of the dry electrode). The ratio S2/S1 of the second area S2 and the first area S1 may be about 0.5 to about 0.99, about 0.6 to about 0.98, about 0.7 to about 0.97, about 0.8 to about 0.96, or about 0.9 to about 0.95. Because the ratio S2/S1 of the second area S2 and the first area S1 has a value in the above range, the second region A2 may be more effectively removed from the dry electrode films 300a, 300b, and 300 to more effectively provide the dry electrode films 300a, 300b, and 300 on the interlayers 200a, 200b, and 200. If the ratio S2/S1 of the second area S2 and the first area S1 is too large, it may be difficult to remove the second region A2 from the dry electrode films 300a, 300b, and 300. If the ratio S2/S1 of the second area S2 and the first area S1 is too small, the area of the second region A2 separated and removed from the dry electrode films 300a, 300b, and 300 may excessively increase.

Referring to FIG. 2D, the electrode current collector 100 may have, for example, a third area S3 (e.g. in a plan view, such as a view in a stacking or thickness direction of the dry electrode). The interlayers 200a, 200b, and 200 may have, for example, the second area S2. The ratio S2/S3 of the second area S2 and the third area S3 may be about 0.5 to about 0.99, about 0.6 to about 0.98, about 0.7 to about 0.97, about 0.8 to about 0.96, or about 0.9 to about 0.95. Because the ratio S2/S3 of the second area S2 and the third area S3 may have a value in the above range, various suitable types (or kinds) of dry electrode films 300a, 300b, and 300 may be introduced onto the electrode current collector 100. If the ratio S2/S3 of the second area S2 and the third area S3 is too large, the dry electrode films 300a, 300b, and 300 spaced apart from the electrode current collector 100 are formed, so that the structural stability of the dry electrode 500 may be degraded. If the ratio S2/S3 of the second area S2 and the third area S3 is too small, the area of the dry electrode films 300a, 300b, and 300 on the electrode current collector 100 becomes excessively small, so that the energy density of the dry electrode 500 may be degraded.

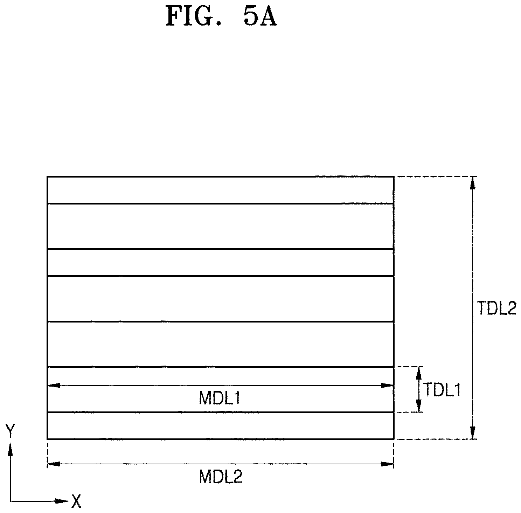

Referring to FIG. 5A, a dry electrode 500 manufactured by the method for manufacturing the dry electrode 500 according to embodiments may include, for example, a plurality of dry electrode films 300a, 300b, and 300 spaced apart from each other along the transverse direction of the electrode current collector 100 on one side or two opposing sides of the electrode current collector 100. The plurality of dry electrode films 300a, 300b, and 300 may each have, for example, a machine-direction first length MDL1 and a transverse-direction first length TDL1. The electrode current collector 100 may have, for example, a machine-direction second length MDL2 and a transverse-direction second length TDL2. Referring to FIG. 5A, the machine direction may be, for example, an x direction, the transverse direction may be, for example, a y direction, and the thickness direction may be, for example, a z direction. The ratio MDL1/TDL1 of the machine-direction first length MDL1 of the dry electrode films 300a, 300b, and 300 and the transverse-direction first length TDL1 of the dry electrode films 300a, 300b, and 300 may be, for example, about 20 or greater, about 30 or greater, about 50 or greater, or about 100 or greater. The ratio TDL1/TDL2 of the transverse-direction first length TDL1 of the dry electrode films 300a, 300b, and 300 and the transverse-direction second length TDL2 of the electrode current collector 100 may be, for example, about 0.3 or less, about 0.2 or less, or about 0.1 or less. Therefore, the plurality of dry electrode films 300a, 300b, and 300 may be spaced apart along the transverse direction of the electrode current collector 100, and may form a dry electrode 500 in a stripe form. The interlayers 200a, 200b, and 200 are between the plurality of dry electrode films 300a, 300b, and 300 and the electrode current collector 100.

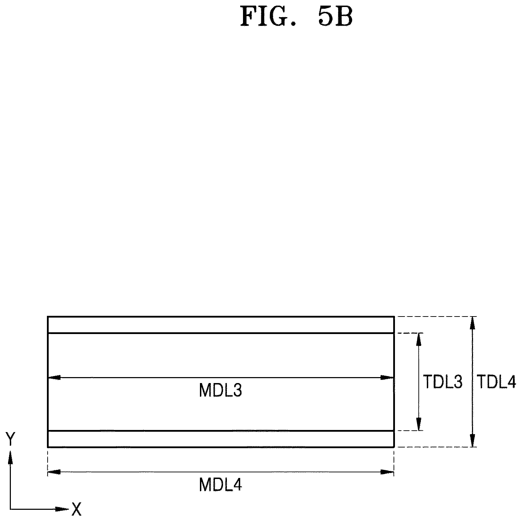

Referring to FIG. 5B, the dry electrode 500 manufactured by the method for manufacturing the dry electrode 500 according to embodiments may include, for example, the dry electrode films 300a, 300b, and 300 provided along the machine direction of the electrode current collector 100 on one side or two opposing sides of the electrode current collector 100. The dry electrode films 300a, 300b, and 300 may have, for example, a machine-direction third length MDL3 and a transverse-direction third length TDL3. The electrode current collector 100 may have, for example, a machine-direction fourth length MDL4 and a transverse-direction fourth length TDL4. Referring to FIG. 5B, the machine direction is, for example, the x direction, the transverse direction is, for example, the y direction, and the thickness direction is, for example, the z direction (e.g., a direction perpendicular or substantially perpendicular to the x direction and the y direction). Both ends in a longitudinal direction of the dry electrode films 300a, 300b, and 300 may be, for example, in contact with both ends in a longitudinal direction of the electrode current collector 100. The machine-direction third length MDL3 of the dry electrode films 300a, 300b, and 300 may be, for example, about 99% to about 101%, about 99.5% to about 100.5%, about 99.8% to about 100.2%, or about 99.9% to about 100.1% of the machine-direction fourth length MDL4 of the electrode current collector 100. Both ends in a transverse direction of the dry electrode films 300a, 300b, and 300 may be, for example, spaced apart from both ends in a transverse direction of the electrode current collector 100, respectively. The transverse-direction third length TDL3 of the dry electrode films 300a, 300b, and 300 may be, for example, about 60% to about 99%, about 70% to about 99%, about 80% to about 99%, or about 90% to about 99% of the transverse-direction fourth length TDL4 of the electrode current collector 100.

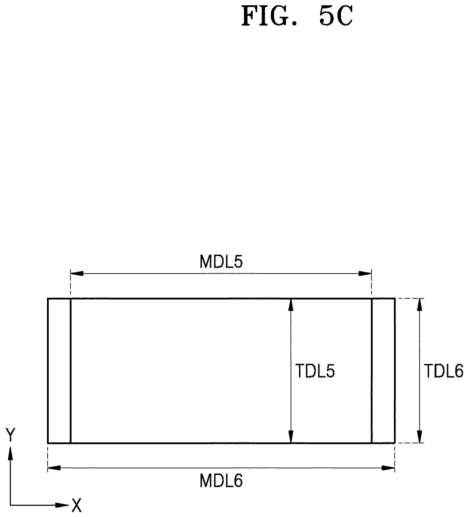

Referring to FIG. 5C, the dry electrode 500 manufactured by the method for manufacturing the dry electrode 500 according to embodiments may include, for example, the dry electrode films 300a, 300b, and 300 provided along the machine direction of the electrode current collector 100 on one side or two opposing sides of the electrode current collector 100. The dry electrode films 300a, 300b, and 300 may have, for example, a machine-direction fifth length MDL5 and a transverse-direction fifth length TDL5. The electrode current collector 100 may have, for example, a machine-direction sixth length MDL6 and a transverse-direction sixth length TDL6. Referring to FIG. 5C, the machine direction is, for example, the x direction, the transverse direction is, for example, the y direction, and the thickness direction is, for example, the z direction (e.g., a direction perpendicular or substantially perpendicular to the x direction and the y direction). Both ends in the longitudinal direction of the dry electrode films 300a, 300b, and 300 may be, for example, spaced apart from both ends in the longitudinal direction of the electrode current collector 100, respectively. The machine-direction fifth length MDL5 of the dry electrode films 300a, 300b, and 300 may be, for example, about 60% to about 99%, about 70% to about 99%, about 80% to about 99%, or about 90% to about 99% of the machine-direction sixth length MDL6 of the electrode current collector 100. Both ends in the transverse direction of the dry electrode films 300a, 300b, and 300 may be, for example, in contact with both ends in the transverse direction of the electrode current collector 100. The transverse-direction fifth length TDL5 of the dry electrode films 300a, 300b, and 300 may be about 99% to about 101%, about 99.5% to about 100.5%, about 99.8% to about 100.2%, or about 99.9% to about 100.1% of the transverse-direction sixth length TDL6 of the electrode current collector 100.

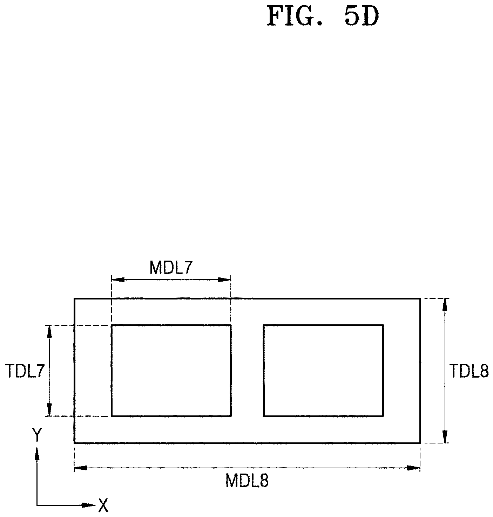

Referring to FIG. 5D, the dry electrode 500 manufactured by the method for manufacturing the dry electrode 500 according to embodiments may include, for example, the plurality of dry electrode films 300a, 300b, and 300 spaced apart from each other along the machine direction of the electrode current collector 100 on one side or two opposing sides of the electrode current collector 100. The plurality of dry electrode films 300a, 300b, and 300 may have a patterned arrangement. Each of the plurality of dry electrode films 300a, 300b, and 300 may be spaced apart from the both ends in the machine direction of the electrode current collector 100 and the both ends in the transverse direction thereof, respectively. The plurality of dry electrode films 300a, 300b, and 300 may each have, for example, a machine-direction seventh length MDL7 and a transverse-direction seventh length TDL7. The electrode current collector 100 may have, for example, a machine-direction eighth length MDL8 and a transverse-direction eighth length TDL8. Referring to FIG. 5D, the machine direction is, for example, the x direction, the transverse direction is, for example, the y direction, and the thickness direction is, for example, the z direction (e.g., a direction perpendicular or substantially perpendicular to the x direction and the y direction). The ratio MDL7/TDL7 of the machine-direction seventh length MDL7 of the dry electrode films 300a, 300b, and 300 and the transverse-direction seventh length TDL7 thereof may be, for example, about 5 or less, about 4 or less, about 3 or less, or about 2 or less. The transverse-direction seventh length TDL7 of the dry electrode films 300a, 300b, and 300 may be about 60% to about 99%, about 70% to about 99%, about 80% to about 99%, or about 90% to about 99% of the transverse-direction eighth length TDL8 of the electrode current collector 100.

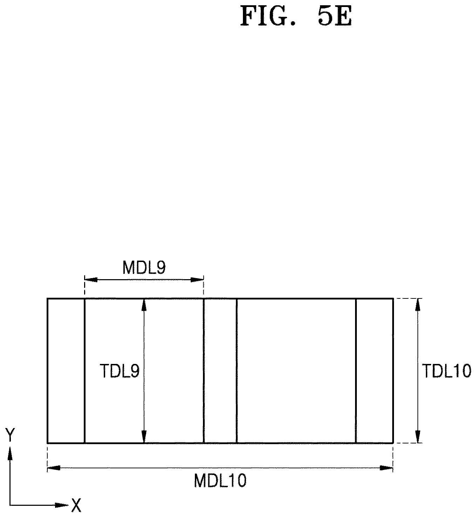

Referring to FIG. 5E, the dry electrode 500 manufactured by the method for manufacturing the dry electrode 500 according to embodiments may include, for example, the plurality of dry electrode films 300a, 300b, and 300 spaced apart from each other along the machine direction of the electrode current collector 100 on one side or two opposing sides of the electrode current collector 100. The plurality of dry electrode films 300a, 300b, and 300 may have a patterned arrangement. Each of the plurality of dry electrode films 300a, 300b, and 300 may be spaced apart from the both ends in the machine direction of the electrode current collector 100, respectively. The plurality of dry electrode films 300a, 300b, and 300 may each have, for example, a machine-direction ninth length MDL9 and a transverse-direction ninth length TDL9. The electrode current collector 100 may have, for example, a machine-direction tenth length MDL10 and a transverse-direction tenth length TDL10. Referring to FIG. 5E, the machine direction is, for example, the x direction, the transverse direction is, for example, the y direction, and the thickness direction is, for example, the z direction (e.g., a direction perpendicular or substantially perpendicular to the x direction and the y direction). The ratio MDL9/TDL9 of the machine-direction ninth length MDL9 of the dry electrode films 300a, 300b, and 300 and the transverse-direction ninth length TDL9 thereof may be, for example, about 5 or less, about 4 or less, about 3 or less, or about 2 or less. The transverse-direction ninth length TDL9 of the dry electrode films 300a, 300b, and 300 may be about 99% to about 101%, about 99.5% to about 100.5%, about 99.8% to about 100.2%, or about 99.9% to about 100.1% of the transverse-direction tenth length TDL10 of the electrode current collector 100.

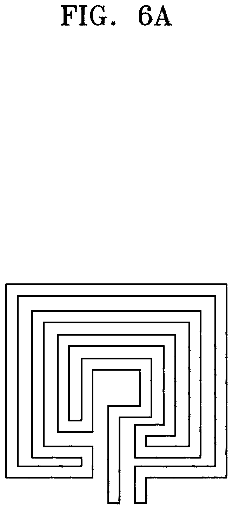

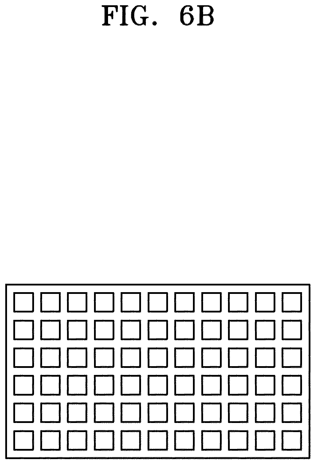

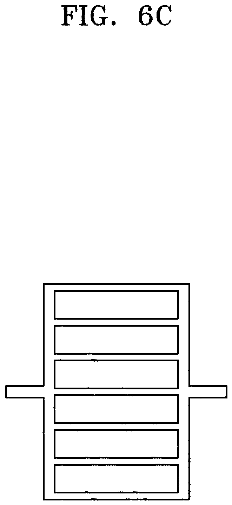

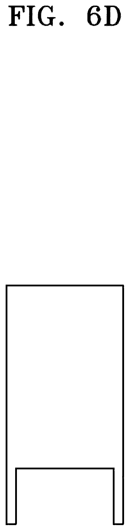

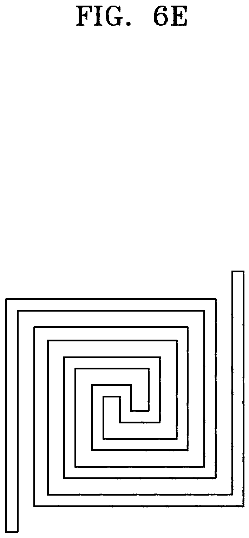

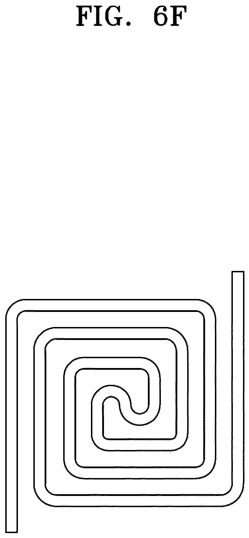

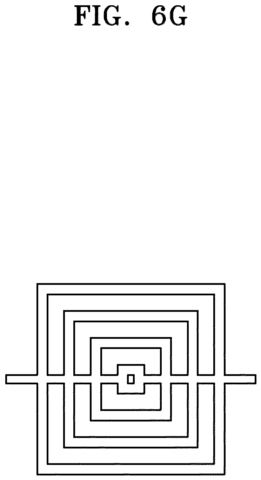

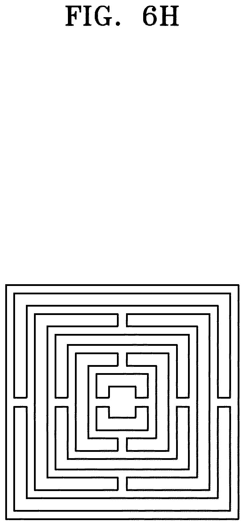

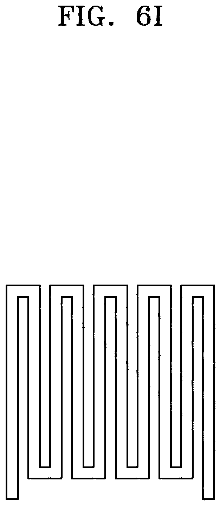

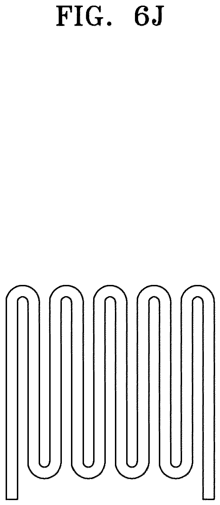

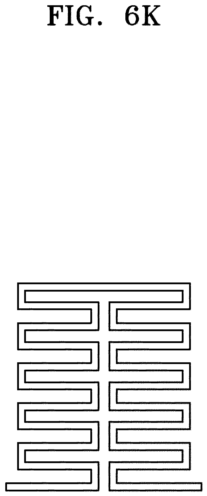

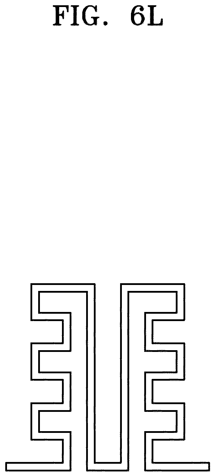

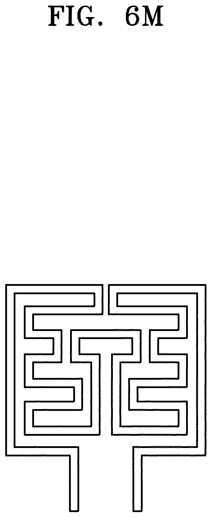

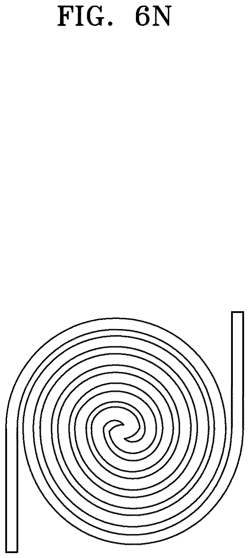

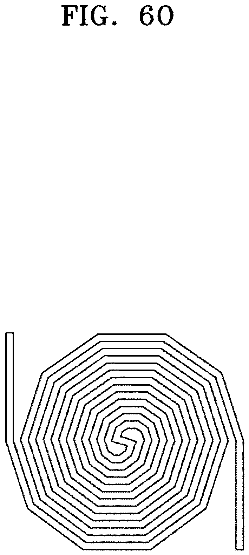

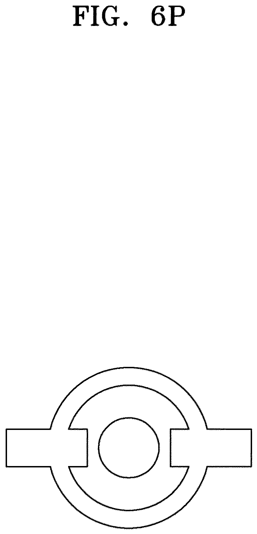

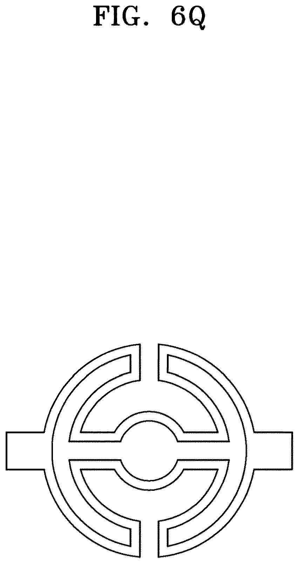

Referring to FIG. 5D and FIG. 5E, the dry electrode films 300a, 300b, and 300 may have, for example, a patterned arrangement, wherein the patterned arrangement may include, for example, a box pattern arrangement, an annular pattern arrangement, a serpentine pattern arrangement, or a combination thereof. The patterned arrangement may have, for example, forms illustrated in FIG. 6A to FIG. 6Q.

In the dry electrode 500 manufactured by the method for manufacturing the dry electrode 500 according to embodiments, if measuring the surface and interfacial measuring analysis system (SAICAS), the dry electrode films 300a, 300b, 300 have a rate of change in vertical relative binding force F_{VR} of about 300% or less, about 250% or less, about 200% or less, about 150% or less, or about 140% or less, according to a depth from a first point spaced apart by about 5% from the surface of the dry electrode films 300a, 300b, and 300 in the direction of the electrode current collector 100 to a second point spaced apart by about 5% from the surface of the electrode current collector 100 with respect to the total thickness of the dry electrode films 300a, 300b, and 300.

The rate of change in vertical relative binding force is calculated from Equation 1 below. Rate of change in vertical relative binding force FVR = [(Maximum value of vertical relative binding force - Minimum value of vertical relative binding force) / Minimum value of vertical relative binding force)] × 100

In the dry electrode 500, if measuring the surface and interfacial measuring analysis system (SAICAS), the rate of change in vertical relative binding force of the dry electrode films 300a, 300b, and 300 is about 300% or less, so that the uniformity of distribution of components of the dry electrode films 300a, 300b, and 300 in the dry electrode 500 is improved. Because side reactions and an increase in internal resistance caused by non-uniform distribution of components in the dry electrode films 300a, 300b, and 300 are suppressed or reduced, the reversibility of an electrode reaction may be improved. Therefore, even in a dry electrode 500 having a high loading, cycle properties of a lithium battery are improved. The rate of change in vertical relative binding force of the dry electrode films 300A, 300B, and 300 may be, for example, about 10% to about 300%, about 20% to about 250%, about 30% to about 200%, about 40% to about 160%, about 50% to about 150%, or about 60% to about 140%.

In the dry electrode 500 manufactured by the method for manufacturing the dry electrode 500 according to embodiments, if measuring the surface and interfacial measuring analysis system (SAICAS), the dry electrode films 300a, 300b, 300 may have a horizontal binding force ratio of about 50% or greater of a second horizontal binding force F_{HA2} at a second point spaced apart by about 10% from the surface of the electrode current collector 100 to a first horizontal binding force F_{HA1} at a first point spaced apart by about 10% in the direction of the electrode current collector 100 from the surface of the dry electrode films 300a, 300b, and 300 with respect to the total thickness of the dry electrode films 300a, 300b, and 300.

The horizontal binding force ratio is represented by, for example, Equation 2 below. Horizontal binding force radio = [Second horizontal binding force FH2 / First binding force FH1] × 100

In an electrode, if measuring the SAICAS, the horizontal binding force ratio may be about 50% or greater, thereby further improving the uniformity of distribution of components in the electrode. Because the electrode may have a horizontal binding force ratio in the above range, cycle properties of a lithium battery employing the electrode may be further improved. The horizontal binding force ratio may be, for example, about 50% to about 300%, about 50% to about 250%, about 50% to about 200%, about 50% to about 150%, or about 50% to about 100%.

### Method for preparing dry electrode film

The dry electrode films 300a, 300b, and 300 may be prepared by, for example, the following method.

First, a dry electrode active material, a dry conductive material (e.g., a dry electrically conductive material), and a dry binder are mixed together in a dry manner to prepare a mixture.

The dry mixing means mixing in a state in which a processing solvent is not included. The processing solvent may be, for example, a solvent used in the preparation of an electrode slurry. The processing solvent may be, for example, water, NMP, and/or the like, but is not limited thereto, and is not limited as long as it is a processing solvent used in the preparation of an electrode slurry. The dry mixing may be performed by using a stirrer at a temperature of about 25 °C to about 65 °C at a rotational speed of about 10 rpm to about 10000 rpm, or about 100 rpm to about 10000 rpm. The dry mixing may be performed by using a stirrer for about 1 minute to about 200 minutes, or about 1 minute to about 150 minutes.

The dry mixing may be performed, for example, more than one time. First, the dry electrode active material, the dry conductive material, and the dry binder may be subjected to primary dry mixing to prepare a first mixture. The primary dry mixing may be performed, for example, at a temperature of about 25 °C to about 65 °C at a rotational speed of about 2000 rpm or lower for about 15 minutes or less. The primary dry mixing may be performed, for example, at a temperature of about 25 °C to about 65 °C at a rotational speed of about 500 rpm to about 2000 rpm for about 5 minutes to about 15 minutes. The dry electrode active material, the dry conductive material, and the dry binder may be uniformly (e.g., substantially uniformly) mixed together by the primary dry mixing. Subsequently, the dry electrode active material, the dry conductive material, and the dry binder may be subjected to secondary dry mixing to prepare a second mixture. The secondary dry mixing may be performed, for example, at a temperature of about 25 °C to about 65 °C at a rotational speed of about 3000 rpm or higher for about 10 minutes or more. The secondary dry mixing may be performed, for example, at a temperature of about 25 °C to about 65 °C at a rotational speed of about 3000 rpm to about 9000 rpm for about 10 minutes to about 60 minutes. A dry mixture including a fibrillated dry binder may be obtained by the secondary dry mixing.

The stirrer may be, for example, a kneader. The stirrer includes, for example, a chamber, one or more rotation axes provided and rotating inside the chamber, and a blade rotatably coupled to the rotation axis and provided in a longitudinal direction of the rotation axis. The blade may be, for example, one or more selected from a ribbon blade, a sigma blade, a jet (Z) blade, a dispersion blade, and a screw blade. Because the blade is included, a mixture in a dough-like form may be prepared by effectively mixing together the electrode active material, the dry conductive material, and the dry binder without a solvent (e.g., without a processing solvent). The prepared mixture may be introduced into an extrusion device and extruded in the form of a sheet. The pressure at the time of the extrusion may be, for example, about 4 MPa to about 100 MPa, or about 10 MPa to about 90 MPa. The obtained mixture may be in the form of a film. In some embodiments, the obtained mixture may be the dry electrode films 300a, 300b, and 300.

The dry conductive material may be, but is not limited to, Denka black, carbon black, graphite fine particles, natural graphite, artificial graphite, acetylene black, Ketjen black, carbon fiber, carbon nanotubes, metal powder, metal fiber, and/or metal tubes of metals such as copper, nickel, aluminium, silver, and/or the like, a conductive polymer such as a polyphenylene derivative, and/or the like, and may be any suitable conductive material (e.g., electrically conductive material) used in the art. The conductive material may be, for example, a carbon-based conductive material (e.g., a carbon-based electrically conductive material).

The dry binder may be, but is not necessarily limited to, a vinylidene fluoride/hexafluoropropylene copolymer, polyvinylidene fluoride, polyacrylonitrile, polymethyl methacrylate, polytetrafluoroethylene (PTFE), a mixture of the aforementioned polymers, a styrene-butadiene rubber-based polymer, and/or the like, and the solvent may be, but is not necessarily limited to, N-methylpyrrolidone (NMP), acetone, water, and/or the like, and any suitable dry binder and any suitable solvent used in the art may be used.

It is also possible to add a plasticizer and/or pore providing agent to the composition of an electrode active material to form pores inside an electrode plate.

The contents of the electrode active material, the dry conductive material, and the dry binder used in the electrode active material layer may be at any suitable levels generally used in a lithium battery.

A positive electrode uses a positive electrode active material as the electrode active material. The positive electrode active material refers to the electrode section described above. A negative electrode uses a negative electrode active material as the electrode active material. The negative electrode active material refers to the electrode section described above.

### Lithium battery

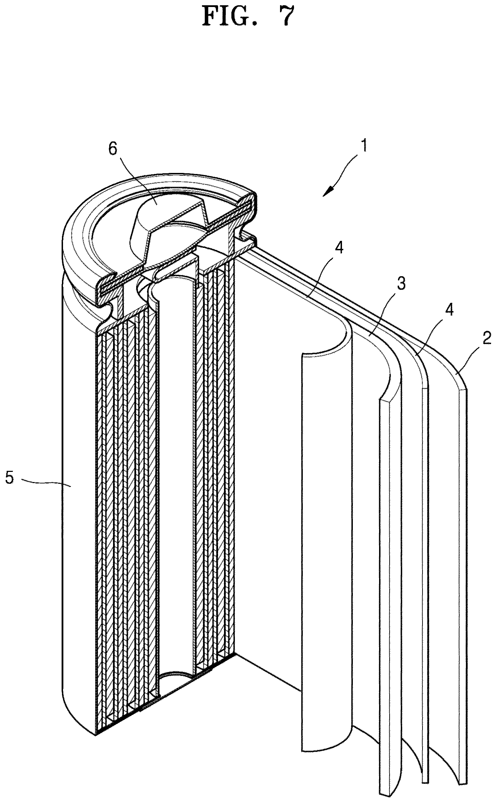

According to another embodiment, a lithium battery 1 (FIGS. 7-9) includes a positive electrode, a negative electrode, and an electrolyte between the positive electrode and the negative electrode, wherein at least one selected from the positive electrode and the negative electrode is the dry electrode 500 manufactured by the above-described method for manufacturing the dry electrode 500.

The lithium battery 1 is, for example, a lithium ion battery, a lithium solid battery, a lithium air battery, or the like.

The lithium battery 1 is manufactured by, for example, the following example method, but is not necessarily limited to such a method and the method may be adjusted according to desired or required conditions.

First, according to the above-described method for manufacturing the dry electrode 500, one or both of the positive electrode and the negative electrode may be manufactured. For example, if one electrode of the positive electrode and the negative electrode is manufactured by the above-described method for manufacturing an electrode, the other electrode may be manufactured by a manufacturing method utilizing a wet manner. For example, the other electrode may be manufactured by preparing an electrode slurry including an electrode active material, a conductive material (e.g., an electrically conductive material), a binder, and a solvent, and coating and drying the prepared electrode slurry on the electrode current collector 100. A conductive material (e.g., an electrically conductive material) and a binder included in an electrode manufactured in a wet manner may be selected from the conductive material and the binder used in the manufacture of the dry electrode 500 described above.

A separator to be inserted between the positive electrode and the negative electrode is prepared.

The separator may be any suitable separator generally used in a lithium battery. As the separator, for example, a separator that has low resistance to ion movement of an electrolyte and excellent electrolyte solution moisture retention ability may be used. The separator may be selected from, for example, glass fiber, polyester, Teflon, polyethylene, polypropylene, polytetrafluoroethylene (PTFE), or a combination thereof, and may be in the form of a non-woven or woven fabric. A windable separator such as polyethylene, polypropylene, and/or the like may be used in a lithium ion battery, and a separator having excellent organic electrolyte solution impregnation ability may be used in a lithium ion polymer battery.

The separator may be manufactured by the following example method, but is not necessarily limited to such a method and the method may be adjusted according to desired or required conditions.

First, a separator composition is prepared by mixing together a polymer resin, a filler, and a solvent. The separator composition is directly coated and dried in an upper portion of an electrode to form a separator. For example, the separator composition is cast and dried on a support, and then a separator film peeled off from the support is stacked in the upper portion of the electrode to form a separator.

A polymer used in the preparation of the separator is not limited, and any suitable polymer used in a binder of an electrode plate may be used. For example, a vinylidene fluoride/hexafluoropropylene copolymer, polyvinylidene fluoride (PVDF), polyacrylonitrile, polymethyl methacrylate, or a mixture thereof may be used.

The electrolyte is prepared.

The electrolyte may be, for example, an organic electrolyte solution. The organic electrolyte solution may be prepared by dissolving a lithium salt in an organic solvent.

The organic solvent may be any suitable organic solvent used in the art. The organic solvent may be, for example, propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N, N-dimethylformamide, dimethylacetamide, dimethylsulfoxide, dioxane, 1,2-dimethoxyethane, sulfolane, dichloroethane, chlorobenzene, nitrobenzene, diethylene glycol, dimethylether, a mixture thereof, and/or the like.

The lithium salt may be any suitable lithium salt used in the art. The lithium salt may be, for example, LiPF₆, LiBF₄, LiSbF₆, LiAsF₆, LiClO₄, LiCF₃SO₃, Li(CF₃SO₂)_{2N}, LiC₄F₉SO₃, LiAlO₂, LiAlCl₄, LiN(CₓF₂ₓ₊₁SO₂)(C_{y}F_{2y+1}SO₂)(where x, y are natural numbers), LiCl, Lil, a mixtures thereof, and/or the like.

For example, the electrolyte may be a solid electrolyte. The solid electrolyte may be, for example, boron oxide, lithium oxynitride, and/or the like, but is not limited thereto, and may be any suitable solid electrolyte used in the art. The solid electrolyte may be formed on the negative electrode by, for example, sputtering and/or the like, and/or a separate solid electrolyte sheet is stacked on the negative electrode. The solid electrolyte may be, for example, an oxide-based solid electrolyte and/or a sulfide-based solid electrolyte.

Referring to FIG. 7, the lithium battery 1 according to embodiments includes a positive electrode 3, a negative electrode 2, and a separator 4. The positive electrode 3, the negative electrode 2, and the separator 4 may be wound and/or folded to form a battery structure 7. The battery structure 7 is accommodated in a battery case 5. An organic electrolyte solution is injected into the battery case 5 and sealed with a cap assembly 6 to complete the lithium battery 1. The battery case 5 has a cylindrical shape, but is not necessarily limited to such a shape, and may have, for example, an angular shape, a thin-film shape, or the like.

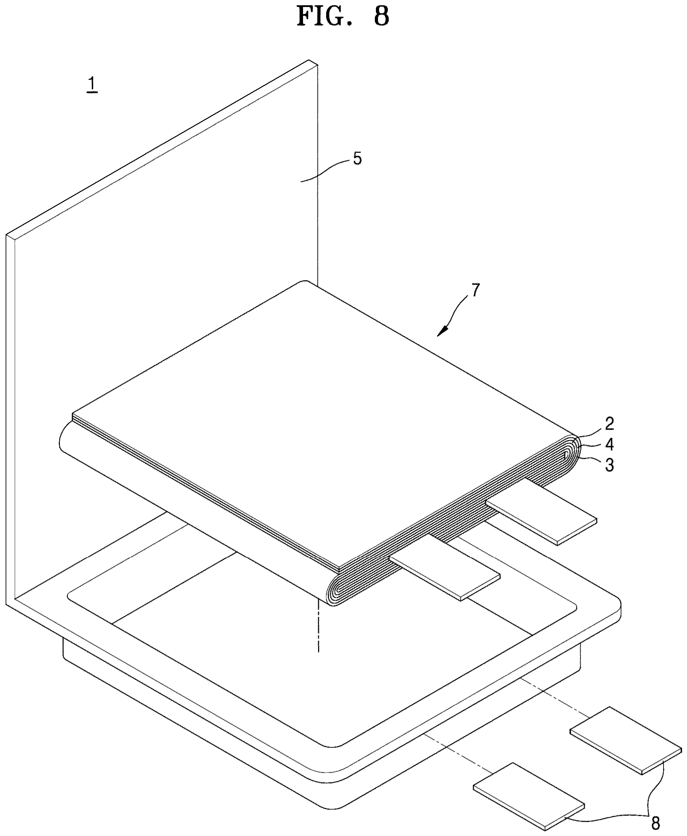

Referring to FIG. 8, a lithium battery 1 according to embodiments includes a positive electrode 3, a negative electrode 2, and a separator 4. The separator 4 is between the positive electrode 3 and the negative electrode 2, and the positive electrode 3, the negative electrode 2, and the separator 4 may be wound and/or folded to form a battery structure 7. The formed battery structure 7 is accommodated in a battery case 5. An electrode tab 8 serving as an electrical path for inducing a current formed in the battery structure 7 to the outside may be included. An organic liquid electrolyte is injected into the battery case 5 and sealed to complete the lithium battery 1. The battery case 5 has an angular shape, but is not necessarily limited to such a shape, and may have, for example, a cylindrical shape, a thin-film shape, or the like.

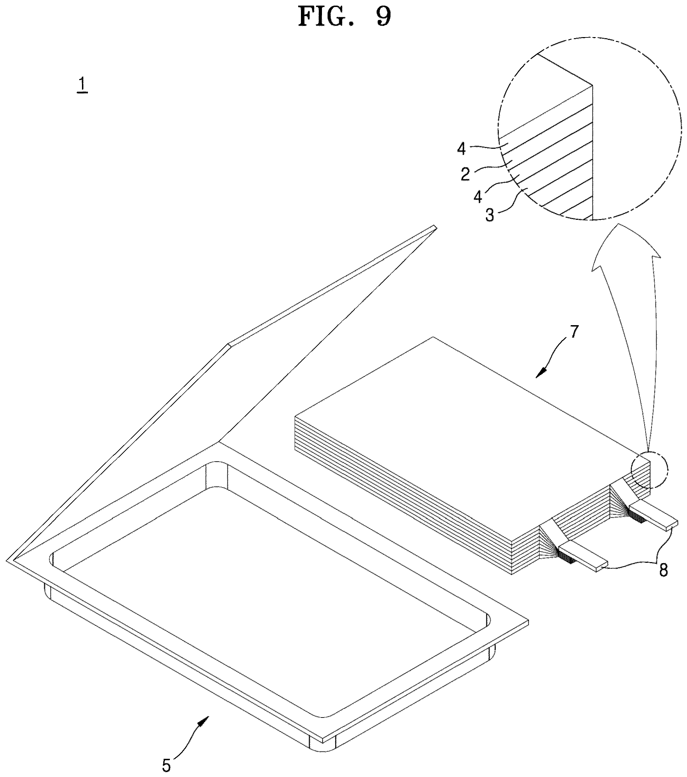

Referring to FIG. 9, a lithium battery 1 according to embodiments includes a positive electrode 3, a negative electrode 2, and a separator 4. The separator 4 is between the positive electrode 3 and the negative electrode 2 to form a battery structure. The battery structure 7 is stacked in a bi-cell structure, and then accommodated in the battery case 5. An electrode tab 8 serving as an electrical path for inducing a current formed in the battery structure 7 to the outside may be included. An organic electrolyte solution is injected into the battery case 5 and sealed to complete the lithium battery 1. The battery case 5 has an angular shape, but is not necessarily limited to such a shape, and may have, for example, a cylindrical shape, a thin-film shape, or the like.

A pouch-type lithium battery corresponds to that using a pouch as a battery case in the lithium batteries of FIGS. 7-9. The pouch-type lithium battery includes one or more battery structures. A separator is between a positive electrode and a negative electrode to form a battery structure. The battery structure is stacked in a bi-cell structure, impregnated with an organic electrolyte solution, and then accommodated and sealed in a pouch to complete the pouch-type lithium battery. For example, in some embodiments, the positive electrode, the negative electrode, and the separator, which are described above, are simply stacked to be accommodated in a pouch in the form of an electrode assembly, or wound and/or folded into a jelly-roll type electrode assembly, and then accommodated in a pouch. Then, an organic electrolytic solution is injected into the pouch and sealed to complete the lithium battery.

Lithium batteries have excellent lifespan properties and high-rate properties, and thus, are used, for example, in electric vehicles (EVs). Lithium batteries have excellent lifespan characteristics and high rate characteristics. Due to these characteristics, lithium batteries are used, for example, in electric vehicles (EVs). For example, the lithium batteries are used in hybrid vehicles such as plug-in hybrid electric vehicles (PHEVs). The lithium batteries are used in fields that utilize or require large amounts of power storage. For example, lithium batteries are used in electric bicycles, power tools, and the like.

A plurality of lithium batteries may be stacked to form a battery module, and a plurality of battery modules may form a battery pack. Such a battery pack may be used in any suitable device that utilizes or requires high capacity and high output. For example, the battery pack may be used in laptops, smartphones, electric vehicles, and the like. The battery module may include, for example, a plurality of batteries and a frame that hold the same. The battery pack may include, for example, a plurality of battery modules and a bus bar for connecting the same. The battery module and/or the battery pack may further include a cooling device. A plurality of battery packs may be controlled by a battery management system. The battery management system may include a battery pack and a battery control device connected to the battery pack.

The present disclosure is described in more detail with reference to the following examples and comparative examples. However, the examples are merely illustrative of embodiments of the present disclosure, and the scope of the present disclosure is not limited thereto.

### Manufacture of lithium battery (half-cell)

### Example 1: Thickness ratio of outer peripheral region/inter-region = 2, cross-sectional electrode

### Dry electrode film

LiNi_{0.91}Co_{0.05}Al_{0.04}O₂ (hereinafter, referred to as NCA91) having an average particle diameter (D50) of about 15 µm as a dry positive electrode active material, a carbon conductive material (Denka Black) as a dry conductive material, and polytetrafluoroethylene (PTFE) as a dry binder were introduced into a blade mixer at a weight ratio of 96:1.8:2.2, and then subjected to primary dry mixing at 25 °C at a rate of 1000 rpm for 10 minutes to prepare a first mixture in which the positive electrode active material, the conductive material, and the binder were uniformly mixed together.

Subsequently, to allow fibrillization of the dry binder to proceed, the first mixture was further mixed at 25 °C at a rate of 5000 rpm for 20 minutes to prepare a second mixture. No solvent was used in the preparation of the first mixture and the second mixture. The prepared second mixture was introduced into an extruder and extruded to prepare a positive electrode active material layer in a sheet shape. The pressure at the time of the extrusion pressure was about 50 MPa. The extrusion direction corresponds to a machine direction.

The prepared positive electrode active material layer sheet was roll-pressed to prepare a dry positive electrode film. The dry positive electrode film was a self-standing film. The pressure at the time of the roll-pressing was about 3 ton/cm².

### Manufacturing of first laminate

On one side of a 12 µm-thick aluminium thin-film positive electrode current collector, a first laminate including a carbon layer was prepared as an interlayer.

The length of the carbon layer was equal to the length of the positive electrode current collector in the machine direction. The width of the carbon layer was about 90% of the width of the positive electrode current collector in a transverse direction. The carbon layer was provided in the center of the positive electrode current collector by being spaced apart by about 5% from each of both ends of the positive electrode current collector in the transverse direction.

The carbon layer had the same length as the length of the positive electrode current collector in the machine direction, and further included an outer peripheral region provided in a region up to 5% from each of both ends of the carbon layer, wherein the ratio of the thickness of the outer peripheral region to the thickness of a inter-region excluding the outer peripheral region was about 2.

The carbon layer was prepared by coating and then drying a composition including a carbon conductive material (Denka Black) and polyvinylidene fluoride (PVDF) on an aluminium thin film. The thickness of the carbon layer on one side of the aluminium thin film was about 1 µm (the thickness of the inter-region is 1 µm, and the thickness of the outer peripheral region is 2 µm).

### Manufacturing of second laminate and dry positive electrode

A dry positive electrode film was on one side on which the carbon layer of the first laminate was provided to prepare a second laminate. The thickness of the dry positive electrode film was about 100 µm.

The area of the dry positive electrode film was the same as that of the positive electrode current collector. The dry positive electrode film included a first region on the carbon layer and a second region on the positive electrode current collector. The second region was provided extending from the first region beyond the outer periphery of the carbon layer.

The second region of the dry positive electrode film was bent by 180 degrees at one end in a longitudinal direction of the dry positive electrode film, and then pulled in the longitudinal direction along a cut line of the dry positive electrode film. The cut line was prepared along the outer peripheral region due to the difference in thickness between the inter-region and the outer peripheral region of the carbon layer, without additional processing for cut line.

The second region was separated from the first region of the dry positive electrode film from one end to the other end in the longitudinal direction of the dry positive electrode film to completely remove the second region of the dry positive electrode film on the positive electrode current collector. A dry positive electrode active material layer was provided only on the carbon layer, and a dry positive electrode free of the dry positive electrode active material layer was prepared on the positive electrode current collector.

In the process of removing the second region of the dry positive electrode film, no damage was done to the positive electrode current collector. The dry positive electrode active material layer was free of a burr or a recessed portion provided adjacent to the outer periphery thereof.

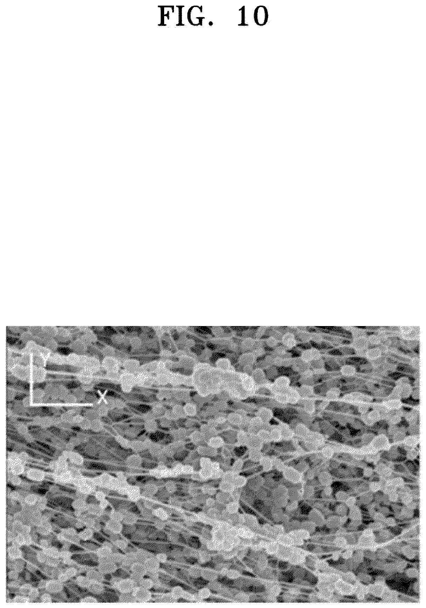

A scanning electron microscope image of a cut surface of the dry positive electrode active material layer after removing the second region of the dry positive electrode film is shown in FIG. 10. As shown in FIG. 10, it was confirmed that a fibrillized binder was provided along the longitudinal direction (horizontal direction in the drawing, X direction) of the dry positive electrode active material layer.

### Manufacture of coin cells

A coin cell was manufactured by using the positive electrode prepared above, lithium metal as a counter electrode, a PTFE separator, and a solution in which 1.3 M LiPF₆ was dissolved in ethylene carbonate (EC) + ethylmethyl carbonate (EMC) + dimethyl carbonate (DMC) (3:4:3 volume ratio) as an electrolyte.

### Example 2: Thickness ratio of outer peripheral region/inter-region = 1.5, cross-sectional electrode

A dry positive electrode and a lithium battery were manufactured in substantially the same manner as in Example 1, except that the ratio of the thickness of the outer peripheral region to the thickness of the inter-region of the interlayer was changed to 1.5.

### Example 3: Thickness ratio of outer peripheral region/inter-region = 1.2, cross-sectional electrode

A dry positive electrode and a lithium battery were manufactured in substantially the same manner as in Example 1, except that the ratio of the thickness of the outer peripheral region to the thickness of the inter-region of the interlayer was changed to 1.2.

### Example 4: Thickness ratio of outer peripheral region/inter-region = 2.5, cross-sectional electrode

A dry positive electrode and a lithium battery were manufactured in substantially the same manner as in Example 1, except that the ratio of the thickness of the outer peripheral region to the thickness of the inter-region of the interlayer was changed to 2.5.

### Comparative Example 1: Wet positive electrode

### Manufacture of wet positive electrode

A mixture in which LiNi_{0.91}Co_{0.05}Al_{0.04}O₂ (hereinafter referred to as NCA91) with an average particle diameter (D50) of about 15 µm as a positive electrode active material, a carbon conductive material (Denka Black) as a conductive material, and polytetrafluoroethylene (PTFE) as a binder were mixed together at a weight ratio of 96:1.8:2.2 and mixed together with N-methylpyrrolidone (NMP) in an agate mortar to prepare a slurry for providing a positive electrode active material layer. The slurry was bar coated on one side of an aluminium-foil positive electrode current collector to a thickness of about 12 µm, dried at room temperature, and then dried once again under the conditions of vacuum and 120 °C to prepare a positive electrode active material layer, thereby preparing a laminate. The prepared laminate was roll-pressed to prepare a positive electrode. The pressure at the time of the roll-pressing was about 3.0 ton/cm². The thickness of the positive electrode active material layer of the positive electrode of Comparative Example 1 was the same as the thickness of the positive electrode active material layer of the positive electrode of Example 1.

On a side surface of one end in a longitudinal direction of the wet positive electrode, a cut line was introduced onto a wet positive electrode active material layer in the same position and form as those of the dry positive electrode. Based on the cut line, an inter-region in a transverse direction of the wet positive electrode was defined as a first region, and an end portion in the transverse direction of the wet positive electrode was defined as a second region. The second region of the wet positive electrode active material layer was bent by 180 degrees at one end in the longitudinal direction of the wet positive electrode, and then pulled along the longitudinal direction of the wet positive electrode.

Because the positive electrode active material layer prepared in a wet manner was hard, the positive electrode active material layer cracked in the process of separating the second region, and thus, was not be able to be applied as a positive electrode.

Therefore, in order to perform a charge/discharge experiment, the second region was separated from the first region of the positive electrode active material layer using a laser cutter to prepare a positive electrode.

### Manufacture of coin cells

A lithium battery was manufactured in substantially the same manner as Example 1, except that the above wet positive electrode was used instead of the dry positive electrode.

### Comparative Example 2: Absence of inter-region and outer peripheral region

A positive electrode was manufactured in substantially the same manner as in Example 1, except that a carbon layer having a uniform thickness was formed on an aluminium thin film having a thickness of about 12 µm to prepare a first electrode body.

On a side surface of one end in a longitudinal direction of the dry positive electrode, a cut line was introduced onto a dry positive electrode active material layer in the same position and form as those of the dry positive electrode of Example 1. Based on the cut line, an inter-region in a transverse direction of the dry positive electrode was defined as a first region, and an end portion in the transverse direction of the dry positive electrode was defined as a second region. The second region of the dry positive electrode active material layer was bent by 180 degrees at one end in the longitudinal direction of the dry positive electrode, and then pulled along the longitudinal direction of the dry positive electrode to remove the second region.

In this embodiment, because an additional procedure was performed to introduce the cut line, the number of dry electrodes to be manufactured per unit time was reduced compared to Example 1.

### Comparative Example 3: Absence of inter-region, outer peripheral region, and cut line

A positive electrode was manufactured in substantially the same manner as in Example 1, except that a carbon layer having a uniform thickness was formed on an aluminium thin film having a thickness of about 12 µm to prepare a first electrode body.

Thereafter, an inter-region in a transverse direction of the dry positive electrode was defined as a first region, and an end portion in the transverse direction of the dry positive electrode was defined as a second region. The second region of the dry positive electrode active material layer was bent by 180 degrees at one end in the longitudinal direction of the dry positive electrode, and then pulled along the longitudinal direction of the dry positive electrode to remove the second region.

In this case, the number of dry electrodes to be manufactured per unit time was similar to that of Example 1, but because there was no cut line, the first region was partially cracked in the process of removing the second region.

### Comparative Example 4: Laser punching

A dry electrode film and a positive electrode current collector/interlayer laminate were prepared in substantially the same manner as in Example 1.

### Dry electrode

A dry positive electrode was manufactured in substantially the same manner as in Example 1, except that the second region was separated from the first region of the positive electrode active material layer using a laser cutter along the boundary between the first region and the second region on the side surface of one end in the longitudinal direction of the dry positive electrode. In the process of removing the second region of the positive electrode active material layer, the positive electrode current collector was damaged by the laser. A burr and/or a recessed portion located adjacent to the outer periphery of the dry positive electrode active material layer was formed.

### Evaluation Example 1: Room-temperature charging/discharging evaluation

Lithium batteries manufactured in Examples 1 to 4, Comparative Example 1, and Comparative Example 3 were charged with a constant current at about 25 °C with a current of about 0.1 C rate until the voltage reached about 4.4 V (vs. Li), and then cut off at a current of about 0.05 C rate while maintaining about 4.4 V in a constant voltage mode. Subsequently, the lithium batteries were discharged with a constant current of 0.1 C rate until the voltage reached about 2.8 V (vs. Li) during the discharge (formation cycle).

The lithium batteries that had undergone the formation cycle were charged at about 25 °C with a current of about 0.5 C rate until the voltage reached about 4.4 V (vs. Li). Subsequently, the lithium batteries were discharged with a constant current of 0.5 C rate until the voltage reached about 2.8 V (vs. Li) during the discharge, and such a cycle was repeated under the same conditions until the 100^{th} cycle (100 repetitions).

In all charge/discharge cycles, a 10-minute stop time was provided after every charge/discharge cycle. A part of the room-temperature cycling test results is shown in Table 1 below. The capacity retention rate at the 100^{th} cycle is defined by Equation 3 below. Capacity Retention Ratio [%] = [Discharge capacity at 100th cycle/ Discharge capacity at 1st cycle] × 100

**Table 1**

| | Electrode type | Outer peripheral region thickness/inter-region thickness | Capacity retention ratio [%] |
|---|---|---|---|
| Example 1 | Dry | 2 | 96 |
| Example 2 | Dry | 1.5 | 96.5 |
| Example 3 | Dry | 1.2 | 95 |
| Example 4 | Dry | 2.5 | 95 |
| Comparative Example 1 | Wet | - | 92 |
| Comparative Example 3 | Dry | 1 | 90 |

As shown in Table 1, the lithium batteries of Examples 1 to 4 have improved room-temperature lifespan properties compared to the lithium battery of Comparative Example 3.

The lithium battery including the wet electrode of Comparative Example 1 had poor lifespan properties compared to the lithium batteries including the dry electrodes of Examples 1 to 4.

The wet electrode of Comparative Example 1 was determined to have reduced lifespan properties due to an increase in side reactions caused by the burr and/or the recessed portion of the electrode current collector formed adjacent to the outer periphery of the phosphorus active material layer by the laser cutting.

Because the dry electrode of Comparative Example 3 did not include an outer periphery region, the second region was removed in the absence of a cut line, and during the process, the first region was partially cracked, which was determined to have caused degradation in lifespan properties.

According to one aspect of embodiments, by selectively removing a dry electrode film by using the difference in the thickness of interlayers, it is possible to provide various suitable types (or kinds) of electrode active material layers without damaging an electrode current collector during a dry electrode manufacturing process.

According to another aspect of embodiments, by providing an interlayer between an electrode current collector and a dry electrode film, it is possible to easily adjust the position and shape of the dry electrode film introduced onto the electrode current collector.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims, and equivalents thereof.

Embodiments are set out in the following clauses:
Clause 1. A dry electrode comprising:
   an electrode current collector;
   a dry electrode film disposed on one side or both sides of the electrode current collector; and
   an interlayer disposed between the electrode current collector and the dry electrode film, wherein:
      the interlayer includes: an outer peripheral region disposed along at least a portion of an outer periphery of the interlayer; and an inter-region excluding the outer peripheral region, wherein:
      a thickness of the outer peripheral region is greater than a thickness of the inter-region.
Clause 2. The dry electrode of clause 1, wherein:
   the outer periphery comprises a first outer periphery parallel to a machine X direction and a second outer periphery parallel to a transverse Y direction, wherein:
   the outer peripheral region is disposed along the first outer periphery.
Clause 3. The dry electrode of clause 1, wherein:
   the outer peripheral region is disposed along the outer periphery.
Clause 4. The dry electrode of any one of clauses 1 to 3, wherein:
   a ratio of the area of the outer peripheral region to the total area of the interlayer is about 1% to about 20%.
Clause 5. The dry electrode of any one of clauses 1 to 4, wherein:
   a ratio of the thickness of the outer peripheral region to the thickness of the inter-region is greater than about 1 but not more than about 5.
Clause 6. The dry electrode of any one of clauses 1 to 5, wherein:
   the interlayer comprises a binder, wherein the binder includes one or more selected from a conductive binder and a non-conductive binder.
Clause 7. The dry electrode of clause 6, wherein:
   the interlayer further comprises a carbon-based conductive material.
Clause 8. The dry electrode of any one of clauses 1 to 7, wherein:
   a composition of the inter-region in the interlayer is the same as a composition of the outer peripheral region.
Clause 9. The dry electrode of any one of clauses 1 to 7, wherein:
   a composition of the inter-region of the interlayer is different from a composition of the outer peripheral region.
Clause 10. The dry electrode of any one of clauses 1 to 9, wherein:
   a thickness of a region of the dry electrode film disposed on the inter-region is greater than a thickness of a region of the dry electrode film disposed on the outer peripheral region.
Clause 11. The dry electrode of any one of clauses 1 to 10, wherein:
   the dry electrode film is a self-standing film, and the dry electrode film is free of a residual processing solvent, and
   the dry electrode film comprises a dry electrode active material and a dry binder, wherein the dry binder includes a fibrillized binder, and the dry binder includes a fluorine-based binder.
Clause 12. The dry electrode of clause 11, wherein:
   the dry electrode film further comprises a dry conductive material, wherein the dry conductive material includes a carbon-based conductive material.
Clause 13. A method for manufacturing a dry electrode, the method comprising: arranging an interlayer on an electrode current collector to prepare a first laminate;
   preparing a second laminate by arranging, on the first laminate, a dry electrode film having a larger area than an area of the interlayer, wherein the dry electrode film includes a first region disposed on the interlayer, and a second region extending from the first region beyond an outer periphery of the interlayer; and
   pulling at least a portion of the second region of the dry electrode film to separate the second region from the first region, thereby providing a dry electrode, wherein:
   the interlayer includes: an outer peripheral region disposed along at least a portion of the outer periphery of the interlayer; and an inter-region excluding the outer peripheral region, wherein:
   a thickness of the outer peripheral region is greater than a thickness of the inter-region.
Clause 14. The method of clause 13, wherein:
   the dry electrode film further comprises, on at least a portion of a boundary between the first region and the second region, a cut line disposed along the boundary.
Clause 15. The method of clause 14, wherein:
   in the dry electrode film, the cut line is disposed along at least a portion of the outer periphery of the interlayer.
Clause 16. The method of clause 14 or clause 15, wherein:
   the cut line has a length that is about 40% or less of a total length of the boundary between the first region and the second region.
Clause 17. The method of any one of clauses 13 to 16, wherein:
   the second region is separated from the first region along a machine direction MD of the dry electrode film.
Clause 18. The method of any one of clauses 13 to 16, wherein:
   the second region is separated from the first region along the outer periphery of the interlayer.
Clause 19. A lithium battery comprising: a first electrode; a second electrode; and an electrolyte disposed between the first electrode and the second electrode, wherein:
   the first electrode, the second electrode, or a combination thereof is the dry electrode of any one of clauses 1 to 12.
Clause 20. The lithium battery of clause 19, wherein:
   the electrolyte comprises a liquid electrolyte, a solid electrolyte, or a combination thereof.

## Claims

1. A dry electrode comprising:
an electrode current collector;
a dry electrode film on one side or two opposing sides of the electrode current collector; and
an interlayer between the electrode current collector and the dry electrode film, wherein:
the interlayer comprises: an outer peripheral region provided along at least a portion of an outer periphery of the interlayer; and an inter-region excluding the outer peripheral region, wherein:
a thickness of the outer peripheral region is greater than a thickness of the inter-region.

2. The dry electrode as claimed in claim 1, wherein:
the outer periphery comprises a first outer periphery parallel to a machine X direction and a second outer periphery parallel to a transverse Y direction, wherein:
the outer peripheral region is provided along the first outer periphery; or
the outer peripheral region is provided along the outer periphery.

3. The dry electrode as claimed in claim 1 or claim 2, wherein:
a ratio of the area of the outer peripheral region to the total area of the interlayer is about 1% to about 20%.

4. The dry electrode as claimed in any one of claims 1 to 3, wherein:
a ratio of the thickness of the outer peripheral region to the thickness of the inter-region is greater than about 1 but not more than about 5.

5. The dry electrode as claimed in any one of claims 1 to 4, wherein:
the interlayer comprises a binder, wherein the binder comprises one or more selected from a conductive binder and a non-conductive binder;
optionally wherein the interlayer further comprises a carbon-based conductive material.

6. The dry electrode as claimed in any one of claims 1 to 5, wherein:
a composition of the inter-region of the interlayer is the same as a composition of the outer peripheral region; or
a composition of the inter-region of the interlayer is different from a composition of the outer peripheral region.

7. The dry electrode as claimed in any one of claims 1 to 6, wherein:
a thickness of a region of the dry electrode film on the inter-region is greater than a thickness of a region of the dry electrode film on the outer peripheral region.

8. The dry electrode as claimed in any one of claims 1 to 7, wherein:
the dry electrode film is a self-standing film, and the dry electrode film is free of a residual processing solvent, and
the dry electrode film comprises a dry electrode active material and a dry binder, wherein the dry binder comprises a fluorine-based binder that is fibrillized.

9. The dry electrode as claimed in any one of claims 1 to 8, wherein:
the dry electrode film further comprises a dry conductive material, wherein the dry conductive material comprises a carbon-based conductive material.

10. A method for manufacturing a dry electrode, the method comprising:
providing an interlayer on an electrode current collector to prepare a first laminate;
preparing a second laminate by providing, on the first laminate, a dry electrode film having a larger area than an area of the interlayer, wherein the dry electrode film includes a first region on the interlayer, and a second region extending from the first region beyond an outer periphery of the interlayer; and
pulling at least a portion of the second region of the dry electrode film to separate the second region from the first region, thereby providing a dry electrode, wherein:
the interlayer comprises: an outer peripheral region provided along at least a portion of the outer periphery of the interlayer; and an inter-region excluding the outer peripheral region, wherein:
a thickness of the outer peripheral region is greater than a thickness of the inter-region.

11. The method as claimed in claim 10, wherein:
the dry electrode film further comprises, on at least a portion of a boundary between the first region and the second region, a cut line provided along the boundary;
optionally wherein in the dry electrode film, the cut line is provided along at least a portion of the outer periphery of the interlayer; and/or
optionally wherein the cut line has a length that is about 40% or less of a total length of the boundary between the first region and the second region.

12. The method as claimed in claim 10 or claim 11, wherein:
the second region is separated from the first region along a machine direction MD of the dry electrode film.

13. The method as claimed in claim 10 or claim 11, wherein:
the second region is separated from the first region along the outer periphery of the interlayer.

14. A lithium battery comprising: a first electrode; a second electrode; and an electrolyte between the first electrode and the second electrode, wherein:
the first electrode, the second electrode, or a combination thereof is the dry electrode according to any one of claims 1 to 9.

15. The lithium battery as claimed in claim 14, wherein:
the electrolyte comprises a liquid electrolyte, a solid electrolyte, or a combination thereof.
